# EUROPÄISCHE PATENTANMELDUNG

(11) **EP 1 801 744 A1**
(43) Veröffentlichungstag der Anmeldung: **27.06.2007**
(21) Anmeldenummer: 06024313.6
(22) Anmeldetag: 23.11.2006
(51) Int. Cl.: G06Q 10/00, G06Q 40/00, G06F 17/24

(54) **Computer-implementiertes System zur Erzeugung, Bearbeitung und Verwaltung von strukturierten Datensätzen**

(30) Priorität: 23.11.2005 EP 05025546; 23.11.2005 EP 05025545
(71) Anmelder: UBS AG, 8001 Zürich (CH)
(72) Erfinder: Bank, Marcel, 5452 Oberrohrdorf (CH); Engel, Michael, 8055 Zürich (CH)
(74) Vertreter: Schmidt, Steffen J.

(57) **Zusammenfassung**

Ein computer-implementiertes System zur Erzeugung, Bearbeitung und Verwaltung von strukturierten Datensätzen. In diesem System ist eine Computersoftwareprogramm-Komponente Auftragsmanager vorgesehen, um einen Geschäftsfall unter Berücksichtigung eines zwischen einer Institution und einem jeweiligen Kunden / Partner bestehenden Vertrages abzuwickeln, wobei der Vertrag einen Vertragskopf und wenigstens eine Basisleistung aufweist, die aus einer Produktvorlage abgeleitet sind. Die Abwicklung durch den Auftragsmanager umfasst eine Prüfung von Einzelheiten des jeweiligen Geschäftsfalls auf die Einhaltung von Regeln, die in Bezug auf die Basisleistungen und Geschäftsfälle diesen zugeordnet in einer Regelbasis definiert und elektronisch gespeichert sind.

## Beschreibung

### Hintergrund der Erfindung

In vielen Unternehmen, aber auch in Behörden, fallen heutzutage im Zusammenhang mit der Erbringung von Dienstleistungen, Etablierung und Durchführung von Geschäftsbeziehungen, oder bei der Ausübung staatlicher Aufgaben riesige Datenmengen an. Dabei ist eine strukturierte und systematische datentechnische Definition, Erzeugung, Bearbeitung, Verwaltung, und Darstellung der erbrachten Dienstleistungen, eingegangenen Geschäftsbeziehungen oder dergl. erforderlich. Nur so ist ein effizienter Ablauf bei den Geschäftsfällen möglich und können jederzeit Hintergründe und Einzelheiten der mit dem Datenanfall verbundenen Vorgänge nachvollzogen werden.

Ein Beispiel eines Dienstleistungserbringers sind Banken. Im Bankgeschäft zeigt sich in den letzten Jahren und sogar Jahrzehnten eine zunehmende Ausdifferenzierung der angebotenen Dienstleistungen und Preise. Frühere Einheitsdienstleistungen (Konto, Depot, etc.) mit wenigen Varianten (Privatkonto, Geschäftskonto, etc) werden durch eine zunehmend größere Anzahl unterschiedlicher Dienstleistungen und Preisalternativen ersetzt. Die Palette der angebotenen Finanzinstrumente wird stetig breiter und die einzelnen Finanzinstrumente kundenorientierter und differenzierter.

Gleichzeitig steigen seitens der Kunden/Partner einerseits und der internen Auditoren und der offiziellen Stellen (Aufsichtsbehörden, etc.) andererseits die Ansprüche an die Dienstleistungserbringer hinsichtlich Transparenz, Konsistenz und Vollständigkeit der Daten/Informationen, die dem Kunden/Partner von dem Dienstleistungserbringer bereitgestellt werden und die im Zusammenhang mit der Geschäftsbeziehung erzeugt und archiviert werden.

Wenn zum Beispiel in einer Bank ein 'Produkt' an einen Kunden/Partner verkauft wird, findet ein Abschluss eines Vertrages statt. Mit dem Vertrag werden die Vereinbarungen zwischen Bank und Kunden/Partner festgehalten; das heißt, welche Rechte und Pflichten einerseits die Bank, und andererseits der Kunde/Partner haben. Dabei werden nebst den Grundinformationen vor allem die individuellen Ausprägungen des Produktes aufgenommen.

### Der Erfindung zugrunde liegende Probleme

Ein Problem mit der Erzeugung, Bearbeitung und Verwaltung von strukturierten Datensätzen, wie sie zum Beispiel Verträge zwischen Bankkunden und einer Bank bilden, besteht darin, dass die Bank einerseits möglichst viele gleichförmige Verträge mit ihren Kunden basierend auf ihren Produkten in ihrem Sortiment haben will. Auch soll sich die Abwicklung von Aufträgen zu diesen Verträgen / Produkten möglichst transparent und nachvollziehbar gestalten.
Dabei will / muss aber die Bank auf Kunden-/Partnerwünsche eingehen. Hier ist vermehrt dem Umstand Rechnung zu tragen, dass Kundenberater nicht immer über alle Möglichkeiten, aber auch Beschränkungen, unterrichtet sind, die im Zusammenhang mit einem Produkt / Vertrag beim Ausführen von Aufträgen von Bedeutung sein könnten. Dazu kommt, dass die bankfachliche Überprüfung von 'individuell' vereinbarten Verträgen bzw. das Ausführen von Aufträgen im Rahmen solcher Verträge einen sehr hohen Aufwand mit sich bringen kann.

Ein anderes Problem besteht darin, dass sich der bei herkömmlicher Definition, Erzeugung, Bearbeitung und Verwaltung von Produkten/Verträgen/Dienstleistungen ergebende Datenhaltungsaufwand erheblich steigert, da sich die individuellen Vereinbarungen nur schwer in verständlicher, aber gleichzeitig kompakter und unmittelbar nachvollziehbarerer Form ablegen lassen.

Weiterhin ist die Typisierung von Produkten/Verträgen/Dienstleistungen sowie die Behandlung der damit auftretenden Aufträge bei der herkömmlichen Vorgehensweise sehr erschwert, was sich in gesteigertem Datenverkehr und in einer erhöhten Fehleranfälligkeit mit dem damit verbundenen Mehraufwand niederschlägt.

Schließlich dauert die Entwicklung neuer Produkte bei der herkömmlichen Vorgehensweise relativ lange. Dies ist insbesondere den gestiegenen Anforderungen an die Übereinstimmung mit gesetzlichen Vorgaben, aber dem erhöhten Realisierungs- und Testaufwand im heutigen komplexen IT-Umfeld derartiger Dienstleistungserbringer, zum Beispiel von Banken oder anderen Organisationen geschuldet.

Aus der WO 03/042861 A2 ist ein Verfahren und eine Vorrichtung zur computerimplementierten Generierung und Verwaltung von Verträgen bekannt. Insbesondere ist ein Verfahren und eine Vorrichtung bekannt zur computerimplementierten Verwaltung von Finanzprozessen und insbesondere zur Generierung und Verwaltung von Verträgen im Zusammenhang mit Finanzdienstleistungen. Hier ist beschrieben, Verträge zwischen einem Anbieter und einem Kunden computergestützt zu generieren und zu verwalten. Die Verträge bestehen aus Kerndaten zu einem vertragsgegenständlichen Produkt und aus einem oder mehreren Vertragsbausteinen. Zur Gestaltung eines Vertrags wird eine Auswahl von Kerndaten vorgenommen und eine Auswahl von Vertragsbausteinen vorgenommen. Der Vertrag wird auf der Grundlage der vorgenommenen Auswahl durch Erzeugung und Hinterlegung von Zeigern auf die ausgewählten Kerndaten und Vertragsbausteine generiert. Dabei wird zunächst eine Auswahl der Kerndaten und anschließenden Auswahl der Vertragsbausteine vorgenommen. Auf der Grundlage der ausgewählten Kerndaten, die Informationen und Regeln zu dem vertragsgegenständlichen Produkt enthalten, erfolgt automatisiert eine Überprüfung der Zulässigkeit der Auswahl einzelner Vertragsbausteine. Diese Druckschrift erläutert nur, dass eine Auswahl von Kerndaten und eine Auswahl von Vertragsbausteinen vorgenommen wird, und dass der Vertrag auf der Grundlage der vorgenommenen Auswahl durch Erzeugung und Hinterlegung von so genannten Pointer auf die ausgewählten Kerndaten (= Informationen und Regeln zu dem vertragsgegenständlichen Produkt) und Vertragsbausteine generiert wird. In diesem Dokument ist ein Regelwerk lediglich im Zusammenhang mit der materiellen Disposition auf Sperren und Limite bei eingehenden Zahlungsposten beschrieben. Diese Abarbeitungsregeln steuern die Reaktion des Systems anhand vorgegebener Parameter um zum Beispiel kundengruppenspezifisch zu bestimmen, ob ein Umsatz nachdisponiert oder direkt ausgewiesen werden soll.

Die EP 1 286 283 A2 beschreibt Schnittstellenmodule zur Ausführung dokumentenbasierter elektronischer Geschäftsprozesse auf Transaktionsbasis sowie ein System zur Ausführung elektronischer Geschäftsprozesse auf Transaktionsbasis. Damit soll die Durchführung von dokumentenbasiertem elektronischen Geschäftsverkehr zwischen heterogenen Systemen erleichtert werden. Ein Schnittstellenmodul weist ein Modul zur Visualisierung und Überwachung des Nutzdatenflusses. Diese Visualisierung und Überwachung erfolgt auf Dokumentenbasis. Die Übertragung visualisierter Nutzdaten zu bzw. von einem Terminal kann manuell oder automatische freigegeben werden. Die Dokumentenvorlagen können von einem Master Server in den Datennetz in das Dateisystem des Schnittstellenmoduls eingegeben bzw. dort modifiziert werden. Bei einer Änderung der Konfiguration des Schnittstellenmoduls können automatisch Parameter von davon betroffenen Prozessen des mittels Dokumentenvorlagen abgebildeten Workflows angepasst werden. Die Dokumentenvorlagen und/oder ein vollständiger Workflow kann mittels einer Mappingeinheit in einer Datenbank mit vorbestimmten Destinationen in dem Datennetz koppelbar sein.

### Aufgabe der Erfindung

Aufgabe der Erfindung ist es, einen Weg aufzuzeigen, wie für eine Vielzahl unterschiedlicher Arten von Produkten eines Dienstleistungserbringers, zum Beispiel einer Bank oder anderen Organisation, eine strukturierte und systematische Definition, Erzeugung, Bearbeitung und Verwaltung von strukturierten Datensätzen, wie sie die Dienstleistungen und 'Produkte' einer Bank wiedergeben, auf die Ebene der elektronischen Daten ermöglicht werden kann.

### Erfindungsgemäße Lösung

Zur Lösung dieser Aufgabe ist erfindungsgemäß ein Vertragsmanager vorgesehen, um einen Geschäftsfall unter Berücksichtigung des mit dem jeweiligen Kunden / Partner bestehenden Vertrages abzuwickeln, wobei der Vertrag einen Vertragskopf und wenigstens eine Basisleistung aufweist, die aus einer Produktvorlage abgeleitet sind, wobei die Abwicklung eine Prüfung von Einzelheiten des jeweiligen Geschäftsfalls auf die Einhaltung von Regeln umfasst, die in Bezug auf die Basisleistungen und Geschäftsfälle diesen zugeordnet in einer Regelbasis definiert und elektronisch gespeichert sind.

Die Erfindung bezieht sich damit auf die Unterstützung und Implementierung eines regelbasierten Auftragsmanagers, der ebenso wie ein Vertragsmanager im Zusammenhang mit Basisleistungen oder anderen Elementen von mit dem Kunden / Partner geschlossenen Vertrag definierten Regeln automatisiert auf deren Einhaltung im Rahmen von Geschäftsfällen prüft. Damit sind Aufträge / Geschäftsfälle auszuführen, ohne zur Laufzeit "manuell" Informationen oder in Programmen hinterlegte (hardcoded) Werte / Wertebereiche / Kriterien abfragen zu müssen. Das Modell erlaubt damit eine Konfiguration eines beliebigen Auftragsmanagers anhand seiner Objekte, die aus Basisleistungen, Geschäftsfällen / Geschäftsfall-Typen und einem Regelwerk konfiguriert sind. Somit können die Verträge aus Basisleistungen / Produkten nicht nur konfiguriert werden. Vielmehr kann auch die Abwicklung von auf die Verträge bezogenen Aufträgen durch den Auftragsmanager mit dessen Objekten erfolgen, indem dieser auf diese Objekte und das Regelwerk bei der Abarbeitung der Aufträge / Geschäftsfälle zugreift und zur Prüfung der Aufträge / Geschäftsfälle heranzieht.

Der Vorteil dieser erfindungsgemäßen Vorgehensweise besteht auch darin, dass durch die automatisierte und regelbezogene Abarbeitung zur Risikominimierung und konformen Abwicklung gleichartiger Aufträge führt.

Ein Vertragsmanager ruft aus einem Produktvorlagenverzeichnis, in dem die Strukturen der Produktvorlagen in strukturierter Weise abgelegt sind, eine Produktvorlage zur Individualisierung auf und ergänzt diese spezifisch, indem entweder wenigstens ein vorgesetzter Wert zu übernehmen ist oder ein Wert innerhalb eines zugelassenen Bereiches auszuwählen ist. Damit wird ein einen Vertrag wiedergebendes individualisiertes Vertragsdokument erzeugt und das Anlegen dieses Vertrages in einer Datenbank und dessen technische Abwicklung angestoßen. In ähnlicher Weise wird bei einer Auftragsabwicklung die Einhaltung von Regeln überprüft, die jeweils ein eigenständiges Objekt mit eigener Kennzeichnung und einem beschreibenden Text sind. Diese Regeln werden durch eine Regelbasis zur Verfügung gestellt und durch sie wird bestimmt, welche Bedingungen zu erfüllen sind, damit der Auftrag, wie von einem Kunden/Partner gewünscht, im Rahmen eines Vertrages zwischen dem Kunden / Partner und der Bank abgewickelt wird.

Die Abwicklung von Aufträgen erfolgt unter Berücksichtigung der mit dem jeweiligen Kunden / Partner bestehenden Vertrag und den darin enthaltenen oder ihn bildenden Metadaten, Produktvorlagen, Basisleistungsdefinitionen, Attributen, Werten, Wertebereichen, Validierungs-Regeln, und/oder Abgabe-Regeln.

Aufgrund der verschiedenen möglichen Arten von Vorgängen werden von Geschäftsfällen betroffene Verträge nur über die Buchung bzw. über das Assetpaket gefunden werden. Dabei werden zuerst die in einem Vertrag definierten Konti / Depots festgestellt und dann damit die Buchungen bzw. Assetpakete ermittelt. Erst dann steht der Umfang des Geschäftsfalls fest und kann angezeigt / abgearbeitet / registriert werden. (Noch) Nicht verbuchte Geschäftsfälle können somit nicht bzw. nicht in jedem Fall bzw. nur mit eingeschränkten Möglichkeiten (System-Performanz) gefunden werden.

In dem erfindungsgemäßen System wird ein Geschäftsfall
(i) durch einen Kunden / Partner oder dessen Bevollmächtigten mittels einer expliziten Willensäußerung oder durch eine Instruktion,
(ii) durch Dritte zu Gunsten oder zu Lasten des Kunden / Partner außerhalb der Beziehung zwischen Kunde / Partner und der Institution, oder
(iii) durch vertragliche Bedingungen durch die Institution ausgelöst, oder entsteht aufgrund von Markt-Ereignissen.

Das System sieht vor, dass ein Kunde / Partner der Institution einen Auftrag über einen der vertraglich vereinbarten elektronischen Kanäle erteilt. Die Computersoftwareprogramm-Komponente Auftragsmanager prüft die Berechtigung des Auftrages anhand des zugrunde liegenden Vertrages und im positiven Fall wird ein neuer Geschäftsfall in einer Kundenpositionsdatenbank eröffnet. Die Computersoftwareprogramm-Komponente Auftragsmanager prüft, ob die jeweilige/n Basisleistung/en, aus denen das Produkt konfiguriert ist, sowie der Vertrag, der aus dem Produkt konfektioniert wurde, für den konkreten Auftrag verfügbar sind und bricht im negativen Fall den Geschäftsfall ab. Der Auftragsmanager leitet die Ausführung des Auftrages ein und führt den Auftrag aus. Der Auftragsmanager übergibt den Geschäftsfall an eine Datenbankbewirtschaftungskomponente zur Verbuchung und legt die zugehörigen Daten in einem Archiv ab. Eine Ausgabeprogrammkomponente informiert den Kunden / Partner über den Vollzug seines Auftrages.

Der Auftragsmanager liest bei der Auftragsabwicklung jeweilige Basisleistungen im Rahmen einer automatisierten Regelprüfung aus einer Datenbank aus, durch welche die Ausführung des entsprechenden Geschäftsfalles gesteuert wird. Der Auftragsmanager arbeitet die Prüfung anhand einer sog. Geschäftsfall-ID oder einer Geschäftsfall-Type ID automatisiert ab und stößt die Prüfung gemäß vorherbestimmter Regelwerke an, die einer Produktdatenbank zugeordnet sind.

Eine Produktvorlage umfasst eine oder mehrere zwingend zu einem Produkt gehörende Basisleistungen, und eine oder mehrere ausdrücklich zu einem Produkt dazu- oder abzuwählende Basisleistungen. Eine Basisleistung umfasst eine von der Institution zu erbringende Dienstleistung oder ein Dienstleistungbündel.

Jeder Basisleistungsvertrag basiert auf den in einer Produktvorlage definierten Basisleistungen.

Die Abgaberegeln umfassen Alters-, Domizil-, Kundensegment-, und/oder rechtliche Einschränkungen.

Die Abgaberegeln sind in dem Vertrag nicht zu übersteuern.

Die Abgaberegeln sind mit rechtlichen Einschränkungen zwingend bei der Produktkonfiguration in den Vertrag zu übernehmen.

Validierungsregeln sind vorgesehen, um zu prüfen, ob in dem Vertrag Werte oder - Bereiche von Attributen eingehalten werden, oder ob Eingaben in Feldern im Verhältnis zu den jeweiligen Feldformaten korrekt sind.

Die Validierungsregeln dienen der Prüfung, ob in dem Vertrag Werte oder -Bereiche von Attributen eingehalten werden, oder ob Eingaben in Feldern im Verhältnis zu den jeweiligen Feldformaten korrekt sind, als Ergebnis "OK/NOK" zurückgeben.

Eine oder mehrere Validierungsregeln sind vorgesehen, die zur Individualisierung eines Vertrages eine Vorauswahl und Prüfung von Produktvorlagen vornehmen, für die für einen Kunden / Partner eine Vertragsbeziehung zu eröffnen / zu modifizieren ist, und die bei ihrer Prüfung einen Ergebnissatz zurückgeben.

Zur Individualisierung eines Vertrages sind eine oder mehrere Validierungsregeln zur Ermittlung einer kunden- / partnerspezifischen Voreinstellung (Default) vor oder in der Darstellung auf einer graphischen oder alphanumerischen Benutzeroberfläche vorgesehen.

Validierungsregeln dienen zur Prüfung der Einhaltung eines Wertes oder Wertebereichs oder eines Datensatzes zur Sicherstellung der Verarbeitbarkeit einer Basisleistung, wobei die zu prüfenden Werte/ Wertebereiche/Datensätze in der jeweiligen Produktvorlage vorgegeben sind.

Die zu einem Vertrag gehörenden Daten werden so bewirtschaftet, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

Eine Änderung eines Attributes des Vertragskopfes löst ein Erzeugen eines neuen Eintrages in dem Vertragskopf aus.

Wenigstens ein abgeleitetes Attribut im Vertragskopf ist gespeichert, wobei eine Änderungen eines abgeleiteten Attributes kein Erzeugen eines neuen Eintrages in dem Vertragskopf auslöst, sondern eine Aktualisierung dieses Attributs erfolgt.

Eine Änderung eines Attributes eines Basisleistungsvertrages löst ein Erzeugen eines neuen Eintrages in dem Basisleistungsvertrag aus und/oder erfolgt eine Aktualisierung dieses Attributs im Vertragskopf.

Beim Erzeugen eines individualisierten Vertragskopfes und/oder eines Basisleistungsvertrages wird eine Referenz auf eine Produktvorlage oder eine spezifische Basisleistungen für die jeweilige Produktvorlage erzeugt.

Die Softwareprogramm-Komponente Auftragsmanager erhält zum Aufruf einer Regel eine Regel-ID sowie Eingabewerte für die Regel, womit ein generischer Regeltreiber aufgerufen wird, der eine Regeltabelle liest.

Die Überprüfung der Einhaltung der Regel wird statisch oder dynamisch ausgeführt.

Der Regeltreiber liest Daten zu einer Geschäftsbeziehungs-ID und die Regelverwendung mit Produktvorlagen-ID, und ruft ein Regel-Programm mit folgender Schnittstelle auf: Attribute zur Geschäftsbeziehungs-ID, und Produktvorlagen-ID, und das Regel-Programms gibt als Ergebnis OK/NOK zurück.

Die Softwareprogramm-Komponente Auftragsmanager stellt Funktionalitäten zur Durchführung von Aufträgen betreffend die Kunden-/Partner-relevanten Kunden-Verträge. Zur Durchführung der Aufträge sind Regeln auf der Ebene der Produktvorlagen implementiert. Eine Regel ist dabei ein eigenständiges Objekt mit eigener Kennzeichnung und einem beschreibenden Text ist. Die Regeln werden durch eine Regelbasis zur Verfügung gestellt. Durch eine Regel wird bestimmt, welche Bedingungen zu erfüllen sind, damit einem Kunden / Partner ein Produkt mit der jeweiligen Basisleistung zugänglich gemacht wird. Zwischen einer Regel und ihrer zugeordneten Basisleistung wird eine Beziehung hergestellt. Regeln werden auch übergreifend über mehrere Basisleistungen einer Produktvorlage eingesetzt.

Die Erfindung betrifft ferner ein Computerprogrammprodukt, welches dazu ausgelegt ist, die Realisierung eines in den vorhergehenden Ansprüchen definierten Systems zu bewirken, wenn es von einem Computer oder einem Computer-Netzwerk abgearbeitet wird. Das Computerprogrammprodukt kann beispielsweise auf einem computerlesbaren magnetischen oder optischen Informationsträger (etwa einer CD-ROM) gespeichert sein.

### Kurzbeschreibung der Zeichnungen

Nachfolgend wird die Erfindung anhand der beigefügten Zeichnungen näher erläutert.
Fig. 1 veranschaulicht schematisch ein Computersystem und die in dem Computersystem vorhandenen Computerprogrammkomponenten sowie deren Interaktion.
Fig. 2 veranschaulicht schematisch den Zusammenhang Basisleistung, Produktvorlage und Vertrag.
Fig. 3 veranschaulicht schematisch die Abarbeitung von Regeln durch die Softwareprogramm-Komponente Vertragsmanager.

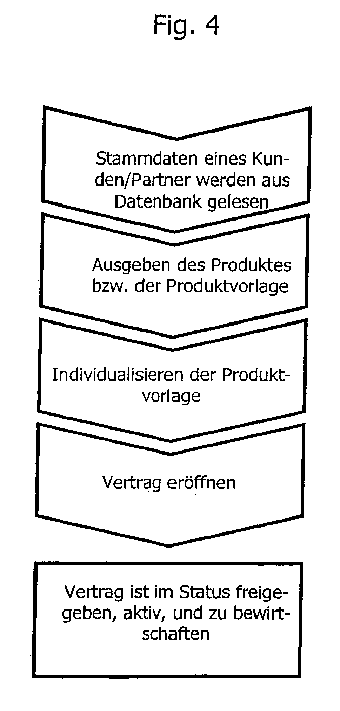

Fig. 4 veranschaulicht schematisch, wie aus einer Produktvorlage ein Vertrag erstellt wird.
Fig. 5 veranschaulicht schematisch den Aufbau von Regeln und deren Zusammenspiel mit den Basisleistungen und den Produktvorlagen.
Fig. 6 veranschaulicht schematisch den Aufruf von Regeln durch die Softwareprogramm-Komponente Vertragsmanager.
Fig. 7 veranschaulicht, wie eine Institution aus Leistungen konfigurierte Produkte bereitstellt, diese Produkte an ihre Kunden im Rahmen von Verträgen verkauft und diese Verträge im Rahmen von Kundenaufträgen abwickelt.
Fig. 8 veranschaulicht schematisch ein Datenmodell, das der Erfindung zugrunde zu legen ist.
Fig. 9 veranschaulicht schematisch ein Beziehungsmodell der einzelnen Abläufe, das der Erfindung zugrunde zu legen ist.

### Detaillierte Beschreibung von Ausführungsbeispielen

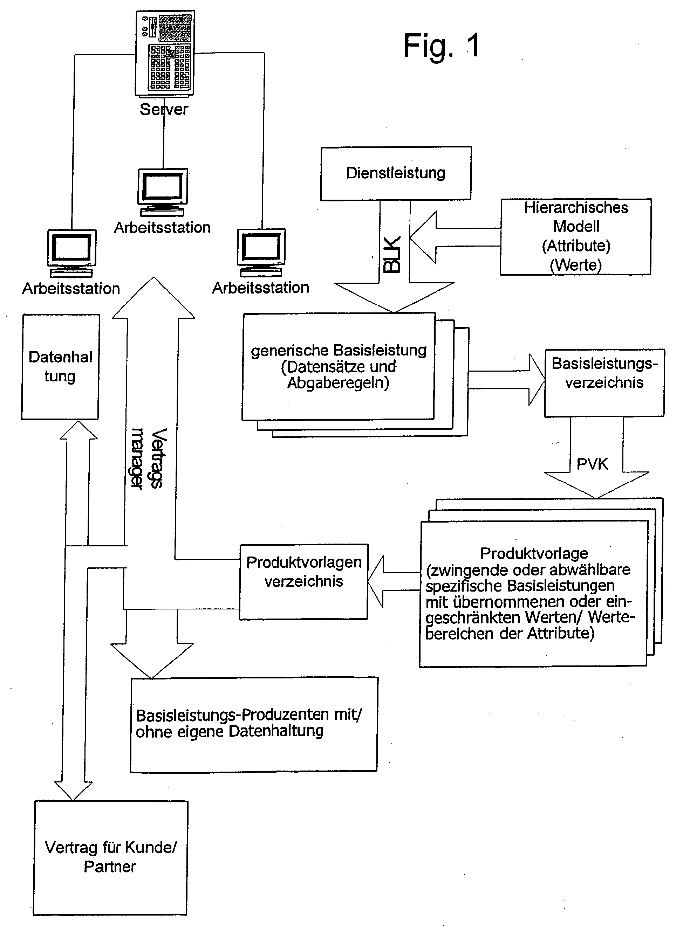

In Fig. 1 ist ein computer-implementiertes System zur Erzeugung, Bearbeitung und Verwaltung von strukturierten Datensätzen veranschaulicht. Dieses System hat einen oder mehrere Server, zur Daten- und/oder Programmhaltung, sowie eine Vielzahl von Arbeitsstationen. Die mit dem Server zum Daten-/Programmaustausch verbunden sind. In diesem System ist eine Computersoftwareprogramm-Komponente Basisleistungskonfigurator BLK vorgesehen ist. Der Basisleistungskonfigurator BLK dient dazu, eine generische Basisleistung zu definieren. Eine generische Basisleistung bildet wenigstens eine erbrachte oder zu erbringende Leistung nach Maßgabe eines ggf. hierarchisch organisierten Modells ab. Dazu wird mittels beschreibender Attribute und zugehörigen, für die Verarbeitung der Basisleistung notwendigen Werten oder Wertebereichen die generische Basisleistung strukturiert und auf einen oder mehrere Datensätze abgebildet, denen jeweils wenigstens eine Abgaberegel zugeordnet ist. Die Datensätze definieren zusammen mit den jeweiligen zugeordneten Abgaberegeln jeweils generische Basisleistung.

Weiterhin ist ein Basisleistungsverzeichnis BL-DICT vorgesehen, in dem die die generischen Basisleistungen definierenden Datensätze zusammen mit ihren zugeordneten Abgaberegeln in strukturierter Weise für einen Zugriff einer Computersoftwareprogramm-Komponente Produktvorlagenkonfigurator als Datenbasis abgelegt sind.

Der Produktvorlagenkonfigurator PVK ist dazu vorgesehen, aus der Datenbasis in dem Basisleistungsverzeichnis eine oder mehrere Basisleistungen zu kombinieren und in eine Produktvorlage POT zu überführen, indem die generischen Basisleistungen durch Übernehmen oder Einschränken der Werte und/oder Wertebereiche für die Attribute zu spezifischen Basisleistungen für die jeweilige Produktvorlage mutiert werden. Dazu umfasst eine Produktvorlage POT eine oder mehrere zwingend zu einem Produkt gehörende Basisleistungen. Außerdem kann sie eine oder mehrere ausdrücklich zu einem Produkt dazu- oder abzuwählende Basisleistungen umfassen.

Die Produktvorlagen sind in einem Produktvorlagenverzeichnis abgelegt. Darin ist die vollständige Struktur der Produktvorlagen in strukturierter Weise für einen Zugriff einer Computersoftwareprogramm-Komponente Vertragsmanager und zur Darstellung auf einer graphischen oder alphanumerischen Benutzeroberfläche GUI abgelegt sind.

Um aus dem Produktvorlagenverzeichnis in dem die Strukturen der Produktvorlagen abgelegt sind, eine Produktvorlage zur Individualisierung aufzurufen und spezifisch zu ergänzen, ist mittels des Vertragsmanagers entweder wenigstens ein vorgesetzter Wert zu übernehmen ist oder ein Wert innerhalb eines zugelassenen Bereiches auszuwählen. Mit anderen Worten wird der zugelassene Bereich (weiter) eingeschränkt. Damit wird ein einen Vertrag wiedergebendes individualisiertes Vertragsdokument erzeugt und das Anlegen dieses Vertrages in einer Datenbank und dessen technische Abwicklung angestoßen.

Der Vertrag umfasst dabei einen Vertragskopf und wenigstens eine Basisleistung, die aus der Produktvorlage abgeleitet sind. Dabei wird aus jeder in den Vertrag aufgenommenen Basisleistung ein Basisleistungsvertrag abgeleitet, von dem einem jeweiligen Basisleistungs-Produzenten vorbestimmte Basisleistungsvertragsdaten übermittelt werden. Bei Produzenten mit eigener Datenhaltung werden im Vertrag die Basisleistungsvertragsdaten als Schlüssel geführt und bei Produzenten ohne eigene Datenhaltung werden diese Basisleistungsvertragsdaten im Vertrag abgelegt. Die Softwareprogramm-Komponente Vertragsmanager stellt Funktionalitäten zur Bewirtschaftung der Vertragsdaten zur Verfügung und führt und verwaltet alle Kunden-/Partner-relevanten Kunden-Verträge.

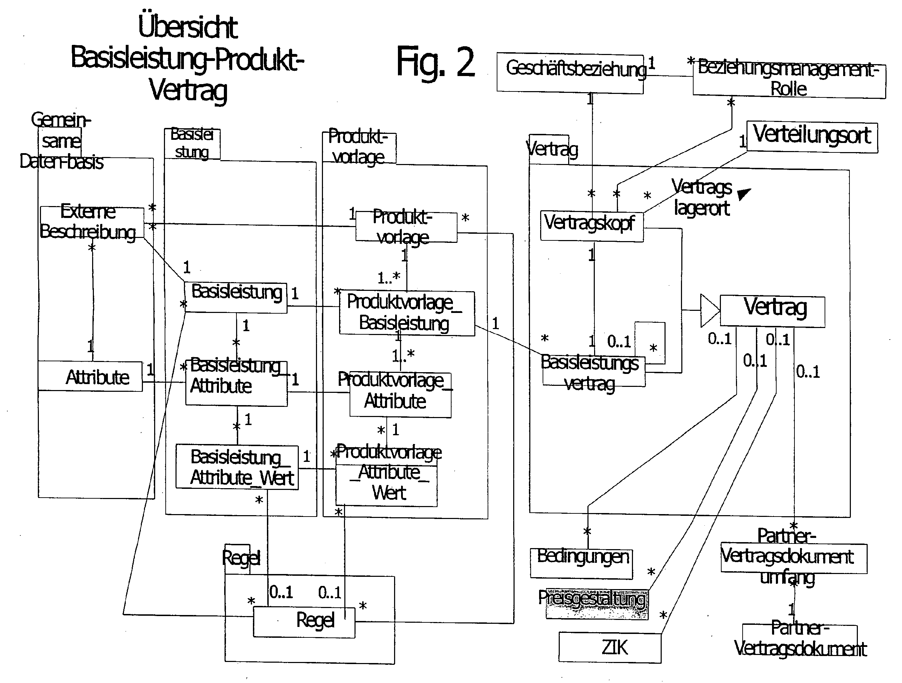

Fig. 2 veranschaulicht diese Zusammenhänge und Beziehungen zwischen Basisleistung(en), Regeln, Produktvorlage(n) und Vertrag noch in weiteren Details.

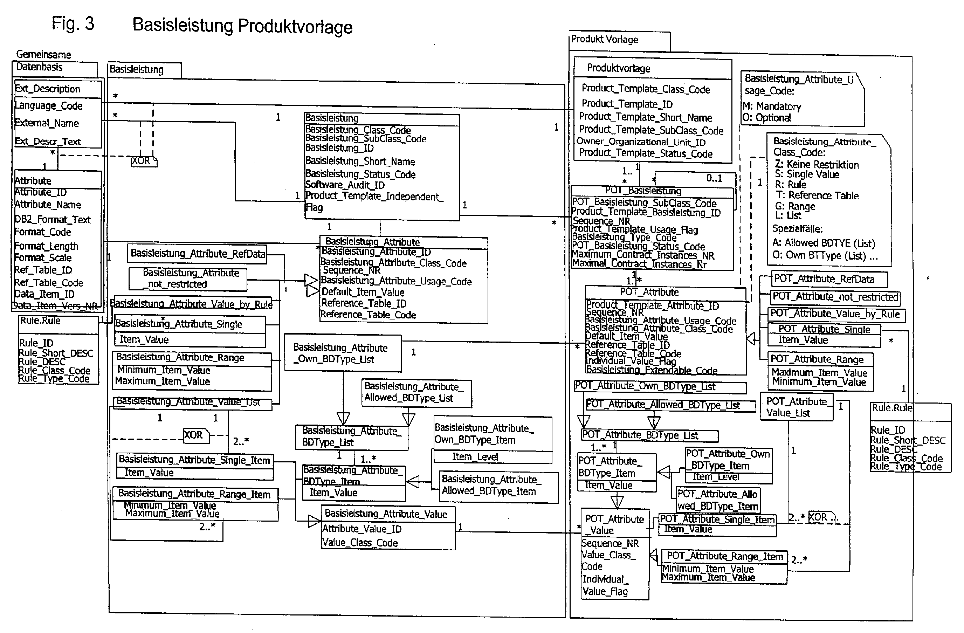

Eine erfindungsgemäße Datenstruktur einer Basisleistung kann folgenden Aufbau haben(siehe Fig. 3):

| Class: | |
|---|---|
| Attribute | |
| Attribut_Directory | Verzeichnis sämtlicher Attribute, mit welchen Basisleistungen und/oder Regeln definiert werden können. |

| Attribut: | |
|---|---|
| DB2_Format_Text | Physisches DB2-Format des Attributes |
| Attribute_ID | StandardIdentifier eines Attributes, welches in einer Basisleistung, Regel o.ä. verwendet wird |
| Attribute_Name | Name des Attributes, welches in einer Basisleistung, einer Regel oder dergl. verwendet wird. |
| Physical_Format_Text Format_Code | Physisches DB2-Fomat, z.B. SMALINT, CHAR(16) Format des definierten Attributes. |

| | Code-Verzeichnis |
|---|---|
| | C Code |
| | D Date |
| | I Identifier |
| | N Number |
| | Q Quantity |
| | T Text |
| Format_Length | Gesamtlänge des Feldes (inkl. Kommastellen) für die Verwendung in einer Basisleistung, Regel o.ä. |
| Format_Scale | Dezimalstellen bei Datentyp Decimal (sonst Zero) bei einem für die Verwendung in einer Basisleistung, Regel o.ä. |
| Reference_Table_ID | Id der Referenztabelle. Darf nur gefüllt sein, wenn es sich um ein Attribut mit FORMAT_CODE = "C" (Code) handelt z.B. |
| | - CNTRY |
| | - R10000 |
| Reference_Table_Code | Code-Nummer der Code-Tabelle (z.B. Code-Nummer innerhalt Ref_Tabelle R10001) |
| | Ist nur gefüllt, wenn im Feld |
| | REFERENCE_TABLE_ID der Wert "R10000' gefüllt ist. |
| Data_Item_ID | Fremdschlüssel zum DataItem-Katalog |
| Data_Item_Version_NR | Version des Referenzierten DataItems aus dem DataItem-Katalog Basisleistung |

| Class: | |
|---|---|
| Basisleistung | Für die Definition von Produkten verfügbare Basisleistungen |

| Attribut: | |
|---|---|
| Basisleistung_ID | Technische STID einer Basisleistung |
| Basisleistung_Short_Name | Kurzname der Basisleistung, nach welcher auch gesucht werden kann Der Kurzname ist ein eindeutiger, alternativer Suchschlüssel |
| Basisleistung_Status_Code | Status der Basisleistung; Für die Bildung von Produkten dürfen nur Basisleistungen mit Status = 2 (Productive) verwendet werden. |

| | Code-Verzeichnis |
|---|---|
| | 1 Entwicklung |
| | 2 Produktion |
| | 3 Außer Dienst gestellt |
| Software_Audit_ID | Ist die ID der physischen Instanz der Software Sub-Komponente. (s. I-SAC) Lieferant der Basisleistung aus anderen |
| | Softwareprogrammkomponenten. Beispiel:" HQE: Card Lifecycle Data |
| Product_Template_Independent_Flag | Kennzeichnung, ob die Basisleisung als unabhängige Basisleistung verwendet werden kann |
| | 0 = Nein (nur als zugeordnete oder Service-Basisleistung verwendbar) |
| | 1 = ja (auch als unabhängige Service-Basisleistung möglich) |
| Basisleistung_Class_Code | Definiert, ob eine Basisleistung dem Vertragskopf oder dem Basisleistungs-Vertrag angehängt wird |

| | Code-Verzeichnis |
|---|---|
| | BL Basisleistung |
| | CH Vertragskopf |

| Class: | |
|---|---|
| Basisleistungs_Attribute In einer Basisleistung verwendetes Attribut | |

| Child_Class: | |
|---|---|
| Basisleistung_Attribute_not_restricted | |
| Basisleistung_Attribute_Range | |
| Basisleistung_Attribute_Single | |
| Basisieistung_Attribute_Wert_By_Regei | |
| Basisieistung_Attribute_Wert_List | |
| | |

| Attribut: | |
|---|---|
| Basisleistung_Attribute_ID | Standard Identifier eines Attributes, welches in einer Basisleistung verwendet wird |
| Sequence_NR | Laufnummer des Attributs in einer Basisleistung |
| Basisleistung_Attribute_Class_Code | Definiert die Einschränkung des Wertebereiches eines Attributes in einer Basisleistung Beispiel: |
| | L: Gültig sind nur Werte aus der Attribut-Liste |
| | G: Gültig sind Werte innerhalb eines Ranges |
| | R: Die Gültigen Werte werden durch eine Regel definiert |

| | Code-Verzeichnis |
|---|---|
| | F fixiert |
| | N nicht eingeschränkt |
| | R eingeschränkt |
| Basisleistung_Attribute_Usage_Code | Festlegung, ob das Attribut in einer Produktvorlage optional oder zwingend ist. Coex ist ein Sonderfall von zwingend |

| | Code-Verzeichnis |
|---|---|
| | C COEX |
| | M Zwingend |
| | O Optional |
| Default_Item_Wert | Default_Wert eines in einer Basisleistung, Regel o.ä. verwendeten Attributes |
| Reference_Tabte_ID | Id der Referenztabelle. Darf nur gefüllt sein, wenn es sich um ein Attribut mit FORMAT_CODE = "C" (Code) handelt z.B. |
| | - CNTRY |
| | - R10000 |
| Reference_Table_Code | Code-Nummer der Code-Tabelle (z.B. Code-Nummer innerhalb Ref_Tabelle; Ist nur gefüllt, wenn im Feld REFERENCE_TABLE_ID der Wert "R10000' gefüllt ist. |

| Class: | |
|---|---|
| Basisleistung_Attribute_not_restricted | In einer Basisleistung verwendetes Attribut, dessen gültigen Werte nicht eingeschränkt sind, d.h. sämtliche Werte gem. Klasse "Attribute" sind zulässig. |
| | Entspricht Attribute_Class_Code = "Z" |
| Parent_Class: Basisleistung_Attribute | |

| Attribut: | |
|---|---|
| Basisleistung_Attribute_not_restricted: | |
| Basisleistung_Attribute_Wert_List | In einer Basisleistung verwendetes Attribut, dessen gültige Werte individuell durch eine Liste von Werte und/oder Bereichen festgelegt werden. |
| | Entspricht Attribute_Class_Code = "L" |

| Class: | |
|---|---|
| Basisleistung_Attribute_Value | |
| Parent_Class: | |
| Basisleistung_Attribute | |
| BL_Attribute_Value | Gültiger Einzel-Wert oder Wertebereich eines in einer Produktvorlage verwendeten Attributes |

| Class | |
|---|---|
| Child_Class: | |
| Basisleistung_Attribute_Range_Item | |
| Basisteistung_Attribute_Singte_Item | |
| Value_Class_Code Attribut | Definiert der Typ eines konkreten Wertes innerhalb einer Wert-Liste |
| | |
| Attribute_Wert_ID Attribut DataStandard | Eindeutige Identifikation eines Attribut-Wertes oder eines Wertebereiches für die Verwendung in einer Basisleistung, Regel o.ä. |
| Basisleistung_Attribute_Single_Item | Gültiger Einzel-Wert eines in einer Basisleistung verwendeten Attributes Class |

| Parent_Class: | |
|---|---|
| Basisteistung_Attribute_Wert | |

| Attribut: | |
|---|---|
| Item_Wert | Gültiger Einzelwert |
| Basisleistung Attribute Wert By_Regel | In einer Basisleistung verwendetes Attribut, dessen Wert durch eine Regel fest definiert ist. Entspricht Attribute_Wert_Class_Code = "R" |

| Class: | |
|---|---|
| Parent_Class: | |
| Basisleistung_Attribute | |
| FK_Regel_ID (Regel) | |

| Attribut: | |
|---|---|
| DataStandard: | Referenz (STID) einer Regel, welche kontextabhängig den Wert des Attributes ermittelt |

| Class: | |
|---|---|
| Basisleistung_Attribute_Wert_By_Regel | |
| Basisleistung_Attribute_Range | |
| BL_Attribute_Wert_Range | Gültiger Wertebereich eines in einer Basisleistung verwendeten Attributes Class |

| Parent_Class: | |
|---|---|
| Basisleistung_Attribute | |

| Attribut: | |
|---|---|
| Minimum_Item_Wert | Minimum Wert des Wertebereiches |
| Maximum_Item_Wert | Maximum Wert des Wertebereiches |
| Basisleistung_Attribute_Range_Item | Gültiger Wertebereich eines in einer Basisleistung verwendeten Attributes Class |

| Parent_Class: | |
|---|---|
| Basisieistung_Attribute_Vaiue | |

| Attribut: | |
|---|---|
| Minimum_Item_Vatue | Minimum Wert des Wertebereiches |
| Maximum_Item_Value | Maximum Wert des Wertebereiches |
| Basisleistung_Attribute_single | In einer Basisleistung verwendetes Attribut, dessen Werte durch einen Wert (Wert) fest definiert ist. Entspricht Basisleistung_Attribute_Class_Code = "S" |

| Class: | |
|---|---|
| Parent_Class: | |
| Basisleistung_Attribute | |

| Attribut: | |
|---|---|
| Item_ Value | Gültiger Einzelwert |
| Basisleistung_Attribute_Value | Gültiger Einzel-Wert oder Wertebereich eines in einer Produktvorlage verwendeten Attributes |

| Class: | |
|---|---|
| DataStandard: | |
| Attribut: | |
| Basisteistung_Attribute_Vatue | |

| Class: | |
|---|---|
| Rule | |
| Child_Class: | Dynamic_ Rule |
| | Static_Rule |

| Attribut: | |
|---|---|
| Rule_ID | |
| Rule_Short_DESC | Kurzbezeichnung einer Regel |
| Rule_DESC | Ausführliche Beschreibung einer Regel |
| Rule_Class_Code | Definiert, ob es sich um eine dynamische oder statische Regel handelt |

| | Code-Verzeichnis |
|---|---|
| | D Dynamic |
| | S Static |
| Rule_Type_Code | Gibt an, um was für eine Art von Regel es sich handelt: Eligibility-Regel (Abgaberegel), Validierungs-Regel, oder Attribute-Regel (Gültige Werte, Default, etc.) |

| | Code-Verzeichnis |
|---|---|
| | A Attribute-Regel |
| | E Eligibility-Regel |
| | V Validation-Regel |

| Class: | |
|---|---|
| External_Description | Sprachabhänge Beschreibungen (Name, Definition) von Attributen, Basisleistungen, Produkten und Regeln |

| Attribut: | |
|---|---|
| Language_Code | Sprache (im ISO-Format) |

| | Code-Verzeichnis |
|---|---|
| | de deutsch |
| | en englisch |
| | es spanisch |
| | fr französisch |
| | it italienisch |
| | pt portugiesisch |
| External_Name | Externer Name eines Attributes in der angegebenen Sprache, einer Basisleistung, eines Produktes oder einer Regel, welcher z.B. für die Beschriftung der graphischen Benutzerschnittstellen (GUIs) verwendet wird. |
| External_Description_Text | Beschreibung eines Attributes in der angegebenen Sprache, einer Basisleistung, eines Produktes oder einer Regel. |

Ein Produkt wird aus einer oder mehreren Basisleistungen erstellt. Dazu enthält ein Basisleistungsverzeichnis (BL-DICT) Basisleistungen (BL) von Providern / Geschäftsbereichen mit den folgenden Zuständen:
- Basisleistung ist freigegeben und aktiv für Produktkonfiguration
- Basisleistung ist freigegeben und inaktiv für Produktkonfiguration
- Basisleistung ist nicht freigegeben und inaktiv für Produktkonfiguration (Es darf auch keine Verträge mehr geben)

Nachstehend werden die Schritte beschrieben, mit denen ein Produkt konfiguriert wird, indem eine Produktvorlage (POT) erstellt wird (oder eine bestehende Produktvorlage (POT) in der Art einer Schablone wieder verwendet wird):
- Produktvorlage definieren (Kurztext, Langtext, Identifier, Status, usw.)
- Eine oder mehrere Basisleistungen aus dem Basisleistungsverzeichnis (BL-DICT) importieren
- Basisleistung muss freigegeben und aktiv sein
   ■ Basisleistung wird als Produktvorlagen-Basisleistung instanziert
   ■ An der Produktvorlagen-Basisleistung (POT-BL) werden folgende Aktionen ausgeführt:
      - Ihr Status wird "in Bearbeitung" geändert
      - Für die Produktvorlagen-Basisleistung werden Regeln definiert.
      - Erlaubte Geschäftsfall-Typen festlegen; eine Basisleistung kann mehrere Geschäftsfälle haben (zum Beispiel die Basisleistung Konto hat die Geschäftsfall-Typen: Abschluss pro Monat, Zwischenabschluss oder Jahresabschluss).
      - Attributwertebereiche festlegen bzw. eingrenzen (innerhalb der erlaubten Werte der Basisleistung).
      - Defaultwerte der Attribute festlegen.

Beim Anlegen einer Produktvorlage aus einer oder mehreren Basisleistungen wird der Stand der eingeschlossenen Basisleistungen fixiert, der zum Zeitpunkt der Erstellung der Produktvorlage produktiv ist. Dies ist unabhängig davon, ob Anpassungen der Basisleistungen in der Produktvorlage vorgenommen werden oder nicht. Diese Referenzierung gilt bis zur nächsten expliziten Mutation der Produktvorlage.

Eine Prüf-Funktion ist vorgesehen, um bei Bedarf alle diejenigen Produktvorlagen zu erfassen, die Basisleistungen verwenden, welche nach der Erstellung bzw. der letzten Mutation der Produktvorlage mutiert wurden. Ausgehend hiervon ist zu überprüfen, ob die betroffene Produktvorlage weiterhin sinnvoll verwendet werden kann. Insbesondere die Individualisierungen von Basisleistungen in einer Produktvorlage und die Zuordnung von Regeln zu einem Produktvorlage sind zu überprüfen. Soll eine Produktvorlage auf den neuesten Stand der enthaltenen Basisleistungen gebracht werden, ist eine explizite Mutation auf den Kopfdaten der Produktvorlage erforderlich.

Dazu wird ein Eintrag zur bestehenden Produktvorlagen-ID mit dem aktuellen Zeitstempel vorgenommen.

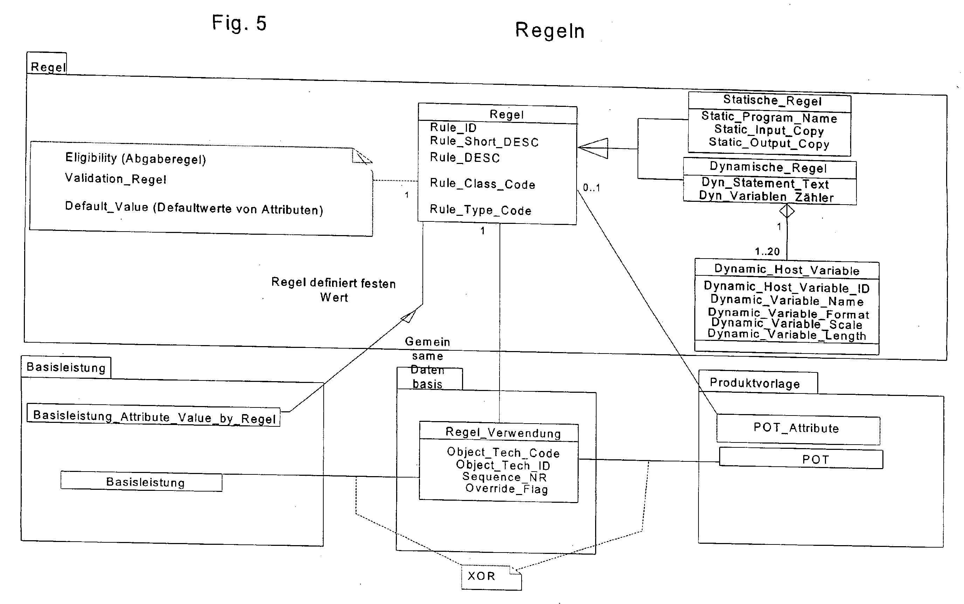

Aus einer Produktvorlage wird ein Vertrag erstellt, indem folgende Aktionen erfolgen (Siehe Fig. 5):
◆ Die Stammdaten eines Kunden/Partner werden aus der entsprechenden Datenbank gelesen.
   - Überprüfung auf für diesen Kunden/Partner passende oder erlaubte Produkte
   - Ausgeben der Produktliste aller passenden/erlaubten Produkte
◆ Die zugehörige Produktvorlage wird gelesen.
   - Eingabe: Produktvorlage_ID und Partner_ID
   - Überprüfung der Abgaberegeln
   - Ausgeben des Produktes bzw. der Produktvorlage auf der graphischen/alphanumerischen Benutzeroberfläche
◆ Individualisieren der Produktvorlage, indem
   - Attribute im Rahmen der möglichen Wertebereiche angepasst werden.
◆ Vertrag eröffnen, indem
- Abgaberegeln überprüft werden
- Der Geschäftsfall "Eröffnung Vertrag" wird in den Datenbanken der Bank angelegt.
- Der Vertrag wird in die Softwareprogramm-Komponente "Vertrag" und in das Vertragsverzeichnis eingetragen.
- Allfällige Instruktionen und Auslösungen werden angelegt.
- Entsprechende Softwareprogramm-Komponenten werden nachgeführt.
- Die Softwareprogramm-Komponenten "Preisgestaltung" und die Attributsableistung (bei Kontoprodukten) erhalten Nachrichten mit den teilweisen oder kompletten Daten des Vertrages.

Bei der Bildung eines Vertrages wird auf die Metadaten der Basisleistungen und Produktvorlagen zugegriffen. Aufgrund dieser Informationen ist bekannt, welche Softwareprogramm-Komponenten bzw. Geschäfts-Subsysteme/Lösungsbereiche im jeweiligen Vertrag beteiligt sein können bzw. müssen. Darüber hinaus ist bekannt, mittels welcher Attribute / Schnittstelle mit der korrespondierenden Komponente Daten ausgetauscht werden können.

Die Metadaten der Basisleistung, insbesondere der Basisleistung in einer Produktvorlage enthalten über die Strukturdaten hinaus auch zulässige Wertebereiche der Basisleistungs-Attribute. Diese Wertebereiche werden in der Regel von der entsprechenden Softwareprogramm-Komponente festgelegt und beschreiben die zulässigen Werte. Die Wertebereiche können bereits in der Basisleistungsdefinition durchaus komplex sein, z.B. sind Kombinationen aus Listen von Einzelwerten und Wertebereichen abbildbar. Dies gilt auch für Verweise auf andere Tabellen wie z.B. Referenzdaten. Aus Sicht eines einzelnen Attributs handelt es sich um statische Wertebereiche, die evtl. nicht ausreichend sein kann. Als Beispiel sei ein Wertebereich für ein Attribut genannt, der mittels einer datumsabhängigen Formel festgelegt ist. Für solche, sicherlich nicht allzu häufigen Fälle kann die Regelbasis als Lösung herangezogen werden, indem für das Attribut der Basisleistung als Wert der Schlüssel der Regel angegeben wird, welche die komplexe Validierung durchführt.

Auch aus Sicht einer Basisleistung kann eine Wertebereichsfestlegung pro Attribut nicht hinreichend sein. Eine attributsübergreifende Festlegung von Wertebereichen ist möglich.

Beispiel: Wenn Attribut A den Wert A1 annimmt, darf Attribut B nur noch die Werte B1, B2 und B3 annehmen; in allen anderen Fällen ist für das Attribut B der Wertebereich B10 bis B100 zulässig.

Ebenfalls aus Sicht einer Produktvorlage kann die attributspezifische Festlegung der Wertebereiche nicht ausreichend sein. Für die oben genannten Fälle, d.h. für dynamische Wertebereiche einzelner Attribute und für alle attributsübergreifenden Wertebereichsprüfungen werden entsprechende Regeln via Regelbasis zur Verfügung gestellt. Die darin enthaltenen Regeln sind auf Wiederverwendbarkeit hin formuliert, damit möglichst viele Prüfungen zu unterschiedlichen Attributen, Basisleistungen und Produktvorlagen mit möglichst wenigen Regeln durchgeführt werden können. Um diese Wiederverwendbarkeit zu ermöglichen, wird zwischen einer Regel und ihrem zugeordneten Objekt (Attribut, Basisleistung, Produktvorlage) explizit eine Beziehung hergestellt. Obwohl zwischen jedem Objekt und jeder Regel eine Beziehung hergestellt werden kann, gibt es folgende Vorgabe:

Für Regeln wird in der Regelbasis kein Lebenszyklus geführt. Hierbei werden Statische und Dynamische Regeln unterschieden. In der Regelbasis werden für statische Regeln nur die Informationen Programm-Name, Input-/Output-Copybookname gehalten. Inhaltliche Mutationen von Regeln werden somit nicht in der Regelbasis, sondern im referenzierten Programm vorgenommen. Dynamische Regeln sind funktional limitiert und nur für Prototyping-Zwecke vorgesehen. Die Beziehung zwischen Regel und Produktvorlage ist als Beziehungsentität im Modell vorgesehen. Hier ist es möglich, im Lebenszyklus einer Produktvorlage nachträglich Regeln hinzufügen bzw. zu entfernen, ohne dass die Produktvorlage selbst geändert werden müsste. Zur korrekten Abbildung einer Produktvorlage wird für diese Beziehung ein Lebenszyklus mitgeführt, so dass zu jedem Zeitpunkt bei der Kontraktierung die richtigen, das heißt die aktuell gültigen Regeln durchlaufen und abgearbeitet werden.

Dynamische Regeln bestehen meist aus einem SQL-Statement und werden von einem dafür zur Verfügung stehenden Treiberprogramm vorbereitet und ausgeführt. Die Konvention besteht darin, dass bei SQLCODE 0 (Zero) der Wert OK, bei SQLCODE 100 der Wert NOK und bei allen anderen SQLCODES der Wert DB-ERROR (dies ist ein Spezialfall für NOK) zurückgegeben wird. Die Regelbasis enthält neben dem SQL-Statementtext auch beschreibende Informationen zu den Variablen, die für die Ausführung der Regel versorgt sein müssen. In der Produktion werden wegen der höheren Stabilität und Geschwindigkeit nur statische Regeln ausgeführt. Da in der Regelbasis zu einer Regel der Programmname sowie die Ein- und Ausgabe-Copybooks gespeichert werden, kann auch für die Durchführung der statischen Regeln ein allgemeines Treiberprogramm zur Verfügung gestellt werden.

Bei Validierungs-Regeln soll der dynamische Wertebereich eines Attributs nicht attributsübergreifend gestaltet sein. Anstelle der statischen Werte zu einem Attribut wird der Schlüssel der Regel eingetragen. Dies bedeutet gleichzeitig, dass in diesem Fall dem Attribut exakt eine Regel zugeordnet wird. Bei einer attributsübergreifenden Wertebereichsprüfung von Attributen einer Basisleistung oder einer Basisleistung in einer Produktvorlage wird zwischen einer Basisleistung bzw. Basisleistung in einer Produktvorlage und einer Regel der Regelbasis eine explizite (n:m)-Beziehung hergestellt. Somit kann eine Basisleistung Beziehung zu mehreren Regeln haben wie auch eine Regel in mehreren Basisleistungen Verwendung finden kann.

Abgabe-Regeln können über mehrere Attribute einer Produktvorlage übergreifend eingesetzt werden, d.h. auch übergreifend über mehrere Basisleistungen dieser Produktvorlage. So können Regeln eine beträchtliche Komplexität annehmen.

Alle oben genannten Typen von Regeln sind "harte" Regeln, d.h. sie zeigen an, ob eine bestimmte Datenkombination zu einem Vertrag führen kann oder nicht.

Dabei empfiehlt es sich, Abgabe-Regeln nur auf der Ebene der Produktvorlagen zu implementieren. Die Definition von Abgabe-Regeln auf der Ebene der Basisleistung schränkt die Wiederverwendbarkeit der Basisleistung stark ein.

Eine Regel ist ein eigenständiges Objekt mit eigener Kennzeichnung (STID) und einem beschreibenden Text von 160 Bytes. Die Argumente einer Regel ist eine Liste von Parameterwerten. Die Rückgabewerte einer Regel sind meist OK bzw. NOK.

Bei den Verarbeitungsarten einer Regel wird zwischen statisch (dahinter verbirgt sich ein Programm mit fester Input- und Outputschnittstelle (Copy-Books)) und dynamisch (hinterlegter Statement-Text eines SQL Statements mit Parameter-Markern in der WHERE Condition Ergebnis sind SQLCODE 0 (=OK), SQLCODE 100 (=NOK), andere Codes (=Error)) unterschieden.

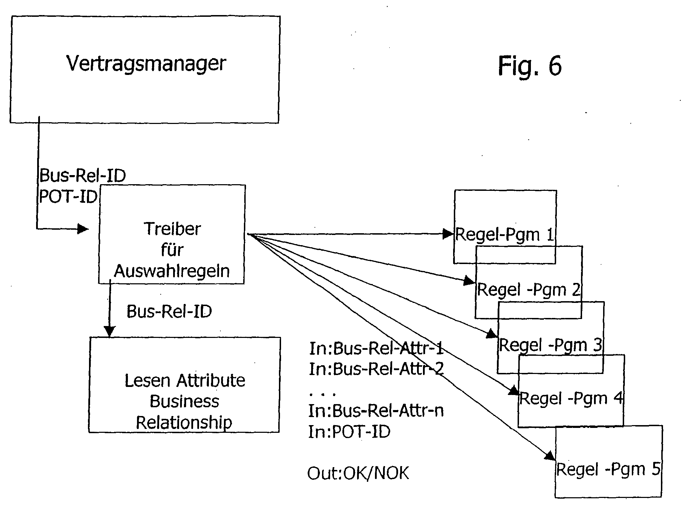

Wie in Fig. 6 veranschaulicht, erfolgt der Aufruf einer Regel so, dass die Softwareprogramm-Komponente Vertragsmanager die Regel-ID sowie die Eingabewerte für die Regel, z.B. aus der GUI erhält. Damit wird ein generischer Regeltreiber aufgerufen; dieser liest die Regeltabelle. Die Regel wird dann wird statisch oder dynamisch ausgeführt (statisch für den Produktionsbetrieb; dynamisch zum Prototyping in der Entwicklung). Die Informationen über Regeln in der Regeltabelle sind im statischen Fall der Programmname und die Eingabe-/Ausgabe-Schnittstelle (= Copybooks) und im dynamischen Fall ein SQL Statement-Text mit Parameter-Markern (Platzhalter für Variablen), mit etwa zum Beispiel 20 Variablen, Informationen zu Name, Format der Variablen.

Bei einer statischen Regel sind alle Copybooks aller statischen Regeln dem Regeltreiber bekannt. Die übergebenen Parameterwerte werden in die Felder des Copybook übertragen. Anschliessend erfolgt ein Aufruf der Art. "CALL programm USING copybook-in, copybook-out". Daraufhin erfolgt eine Rückgabe von OK bzw. NOK aus dem Regeltreiber.

Bei einer dynamischen Regel werden die Parameter-Marker im Statement-Text durch übergebene Werte ersetzt. Die Parameter-Formate sind aus der Regeltabelle bekannt (numeric, character, date-time, ...). Anschließend erfolgt eine Abarbeitung der Regel durch PREPARE und EXECUTE des Statement-Textes. SQLCODE 0 ergibt OK, SQLCODE 100 ergibt NOK, sonst DB-Fehler.

Der Aufruf von Abgaberegeln erfolgt zum Beispiel wenn ein Kunde/Partner eine bestimmte Leistung erhalten möchte. Aufgrund einer Suchfunktion verfügt die Programmkomponente Vertragsmanager über eine Liste von POTs, die die dafür relevanten Basisleistungen enthalten. Die Programmkomponente Vertragsmanager ruft für jedes dieser POTs einen Regeltreiber auf, der die Abgabefähigkeit des POT für den jeweiligen Kunden prüft. Dazu gibt der Regeltreiber die Geschäftsbeziehungs-ID und die POT_ID ein. Als Ausgabe des Regeltreibers kommt dann OK/NOK.

Der Regeltreiber führt folgende Aktivitäten aus: Lesen der Daten zur Geschäftsbeziehungs-ID und Lesen der Regelverwendung mit POT-ID. Anschließend wird jedes Regel-Programm wird mit folgender Schnittstelle aufgerufen: Attribute zur Geschäftsbeziehungs-ID, POT-ID und Rückgabe des Regel-Programms: OK/NOK.

Beim ersten NOK wird der Aufruf der Regel-Programme abgebrochen und dem Vertragsmanager wird NOK zurückgegeben.

Zur Sicherstellung eines statischen Wertebereichs (inkl. Referenztabellen) werden keine Regeln in der Regelbasis benötigt, da dies bereits durch Tabellen für die Attributwerte bereitgestellt wird.

Die Daten von Basisleistungen (BL) und Produktvorlagen (POT) werden so bewirtschaftet, dass jede Mutation dieser Objekte zu jedem Zeitpunkt nachvollziehbar und rekonstruierbar ist. Mutationen können im Onlinebetrieb ad hoc Gültigkeit erlangen. Auch Mutationen in die Zukunft sind zulässig. Aus Stabilitäts- und Handhabungsüberlegungen wird als aktuell gültiger Stand einer Basisleistung bzw. Produktvorlage via Konvention (Empfehlung) der Stand definiert, der zum aktuellen Datum per 0 Uhr gültig ist.

Neben diesem Grundsatz gibt es folgende Konventionen und applikatorische Verfahren, die für die Bewirtschaftung von Basisleistungen und Produktvorlagen vorgesehen sind:

Eine Basisleistung kann auf folgende Art und Weise mutiert werden:
- Hinzufügen/Entfernen von Attributen
- Änderung der zulässigen Wertebereiche von Attributen

Diese Mutationen werden von der prozessierenden Softwareprogramm-Komponente (Basisleistungs-Produzent) veranlasst. Das Hinzufügen bzw. Entfernen von Attributen ist ein relativ selten vorkommender, massiver Eingriff. Analog zu der Änderung der Basisleistung muss auch die Schnittstelle angepasst werden.

Die Basisleistungen bilden die Bausteine, aus welchen die bankfachlichen Produkte zusammenkonfiguriert werden. Dieselbe Basisleistung kann in mehreren unterschiedlichen Produkten eingebunden sein. Eine Basisleistung unterstützt die Abwicklung von Geschäftsfällen einer genau festgelegten Auswahl von Geschäftsfall-Typen. Zu einer Basisleistung gehören mehrere Attribute und deren Werte, welche beim Verkauf eines Produktes und bei der Abwicklung von Geschäftsfällen benötigt werden. Die Erstellung und Veränderung von Basisleistungen erfolgt durch einen Basisleistungsproduzenten. Eine - nicht abschließende - Darstellung von Beispiele von Basisleistungen (BL) sind:
BL Konto mit Zinssatzermittlung auf Durchschnittskapital bei festgelegter Periode
BL Konto ohne Verrechnungssteuer
BL Bonus Zinskonto mit Verrechnungssteuer Freigrenze
BL Zinsloses Konto
BL Konto mit Verrechnungssteuer
BL Konto mit Abschluss ohne Buchung ohne Verrechnungssteuer
BL Konto mit Laufzeitende
BL Konto mit Verrechnungssteuer Freigrenze und Rückzugslimite
BL Konto mit Verrechnungssteuer und Rückzugslimite
BL Kunden Information Konto Service
BL Konto Template
BL Kreditkarte
BL Maestro Card
BL eBanking Karte
BL Einzahlkarte
BL Kundenkarte
BL Tax Reporting
BL Asset Reporting Standard einmalig
BL Asset Reporting Standard
BL Asset Reporting Legal
BL Cash Reporting Bescheinigung
BL Cash Reporting Kontoauszug
BL Amortisation

Ein Geschäftsfall stellt die gegenüber dem Kunden / Partner zu erbringenden oder erbrachten Leistungen unter Zugrundelegung des mit dem Kunden / Partner bestehenden Vertrages dar und dokumentiert diese in einer Datenbank. Der Geschäftsfall kann dabei auf einem Kundenauftrag basieren, muss dies aber nicht, er kann auch durch die Bank initiiert werden (z.B. Zinsabschluss, periodischer Kontoauszug, etc.). Der Geschäftsfall repräsentiert damit eine einmalige, zusammenhängende, von der Bank im Kundengeschäft erbrachte Wertschöpfungsleistung. Typische Geschäftsvorfälle sind z.B. der Kauf von Aktien, eine Zahlung, der Abschluss eines Hypothekarvertrages oder eine Kunden-Adressänderung. Ein Geschäftsfall besteht in der Regel aus einer oder mehreren Geschäftstransaktionen (immer mindestens aus einer Geschäftstransaktion).

Ein Geschäftsfall-Typ (BD Typ) gruppiert gleichartige Geschäftsfälle. Die Geschäftsfall-Typen repräsentieren die Kunden- oder Bestellsicht auf das jeweilige Geschäft. Jeder Geschäftsfall-Typ kann eindeutig einem Geschäftsfall-Typ zugewiesen werden. Der Geschäftsfall-Typ wird, zusammen mit anderen Elementen, zur Steuerung und Abwicklung von Kundenaufträgen verwendet. Alle Geschäftsfälle eines Geschäftsfall-Typs werden von ein und derselben Programm-Komponente verarbeitet. Diese Komponente dient zur Abwicklung dieser Geschäftsfälle.

Eine Geschäftstransaktion ist das Ergebnis einer einmaligen, in sich geschlossenen, aus Kundensicht nicht weiter unterteilbaren Leistungserbringung der Institution / Bank für den Kunden / Partner. Typische Geschäftstransaktionen sind etwa eine einzelne Zahlungsüberweisung im Rahmen eines Sammelauftrags, ein einzelner Übertrag einer Depot-Position im Rahmen eines Depot-Übertrags oder die Erstellung (Druck und Versand) einer Abrechnung über einen Börsenkauf. Bei "elementaren", d.h. relativ einfachen Geschäften wie z.B. einem einzelnen Zahlungsauftrag ohne Anzeige oder einer einfachen Adressenänderung entspricht eine Geschäftstransaktion genau einem Geschäftsfall. Generell spiegelt die Geschäftstransaktionen das Ergebnis eines Prozesses wieder. Ein Prozess ist eine (ggf. komplexe) Aktivität auf einem oder mehreren (ggf. komplexen) Objekten. Dabei repräsentiert das Informationsobjekt Geschäftstransaktion die Aktivität, während die behandelten Objekte als Transaktionspakete erscheinen.

Ein Geschäftstransaktionsereignis - Datensatz ist eine Schnittstelle, welche den einzelnen Geschäftseinheiten-Transaktionsmanagern zur Verfügung stellt. Der Geschäftstransaktionsereignis - Datensatz setzt sich aus genau einem Geschäftstransaktionsereignis - Datensatzkopfteil und "n" Einzeldateneinträgen zusammen. Der Geschäftstransaktionsereignis - Datensatz leitet seinen Inhalt aus der Struktur des Geschäftsfalls, oder der Geschäftstransaktion ab. Der Geschäftstransaktionsereignis - Datensatz ist in der Hauptbuch-Währung Soll-/Haben-Gleich.

Der Geschäftstransaktionsereignis - Datensatzkopfteil trägt die generellen Informationen (Geschäftsfall_ID und Geschäftstransaktion _ID, Vertrags_ID, Geschäftsfall-Datum, etc) zu einem Geschäftstransaktionsereignis.

Der Geschäftstransaktionsereignis - Einzeldateneintrag werden in den operationellen Positionsführungen sowie in anderen Buchungen erstellt. Zudem sind die Geschäftstransaktionsereignis -Einzeldateneinträge für den Geschäftsfall-Nachweis relevant. Die inhaltlichen Details auf dem Geschäftsfall-Nachweis werden aus den Geschäftstransaktionsereignis - Einzeldateneinträgen abgeleitet.

Ein Transaktionspaket beschreibt das Detail der Leistungserbringung gegenüber dem Kunden. Eine Geschäftstransaktion besteht aus mindestens einem bis "n" Transaktionspaketen. Das Transaktionspaket ist ein Bündel von einzelnen Aufträgen, die ihrerseits einen oder mehrere Geschäftsfälle umfassen können. Jeder dieser Geschäftsfälle kann einen eigenen Auftragsmanager (zum Beispiel Assetmanager, Preis- / Zinsmanager, Berichtsmanager etc.) erfordern. Das Transaktionspaket stellt sicher, dass alle Geschäftsfälle - auch in der erforderlichen Reihenfolge - abgewickelt werden.

Ein Assetpaket ist Portfolio oder eine in einer Geschäftstransaktion bearbeitete Menge von Finanzinstrumenten. Ein Assetpaket ist zum Beispiel ein Transaktionspaket (d.h. ist ein Sub-Typ). Typische Assetpakete sind 300 Nestlé Inhaberaktien, 50 Call-Optionen auf Nestlé Inhaber, 230'000 USD, 1 VanGogh "Sonnenblumen", 1 Check Nr. 47233778652, 1 Schuldbrief Nr. 234234234 etc. Im Zustand "gebucht" erhält das Assetpaket zusätzlich einen Vermerk mit den entsprechenden Buchungsinformationen (Buchungsdatum/-zeitpunkt) Ein informatives Assetpaket entspricht einem Assetpaket, das rein informativen Zwecken dient und nie gebucht wird.

Ein Preis-/Zinsmanager dient der Preis- oder Zinsberechnung oder einer anderen Berechnung (z.B. Bruttodividende). Er wickelt damit eine spezielle Klasse der Transaktionspakete ab. Der Preis-/Zinsmanager verwendet ebenfalls Regeln, um Abrechnungseinzelheiten in Zins- und Preisberechnungen durchzuführen. Dazu werden dem Preis-/Zinsmanager Geschäftsfälle zugeführt. Als Ergebnis einer Bearbeitung liefert der Preis-/Zinsmanager ein Kostenelement, einen Rabatt, eine Zwischensumme oder dergl. Der Preis-/Zinsmanager kann nur Ergebnisse liefern, welche sich in Finanzinstrumenten vom Typ "Währung" formulieren lassen. Wenn das Preis/Zins-Element eine Summe oder eine Abrechnungszeile beschreibt, welche einzeln verbucht wird, dann gibt es zusätzlich zum Preis/ Zins-Element ein Assetpaket mit dem entsprechenden Wert des Preis/Zins-Elementes.

Ein Reportpaket ist eine einmalige, inhaltlich vordefinierte, strukturierte Informationssammlung über einen kundenrelevanten Sachverhalt. Ein Reportpaket ist ein Transaktionspaket (d.h. ist ein Sub-Typ). Typische Reportpakete sind etwa eine Börsenabrechnung, ein Kontoauszug, eine Zinsabrechnung oder ein Bestätigungsbrief über den Eingang eines Schecks. Im Reportpaket wird nicht der Inhalt des Reports sondern lediglich die "Lieferschein-Information" zum Report selbst gehalten.

Eine Paketadresse ist ein definierter, in der Regel aus Sicht der Bank externer Knoten (Bestimmungsort) in einem definierten Kommunikations-, Transport- oder Finanznetzwerk, zu dem sich ein spezielles Transaktionspaket hin bewegt oder von dem es kommt. Eine Paketadresse kann eine postalische Adresse (4 Zeilen mit Name, Strasse, Ort, Land...), eine Telefonnummer, eine eMail-Adresse, eine SWIFT-Teilnehmeradresse, eine Kontoidentifikation (Kontonummer plus Postadresse der Bank) oder eine beliebige andere, vom transportverantwortlichen Netzbetreiber akzeptierte, eindeutige Identifikation des Knotens sein. Eine Paketadresse bezeichnet immer einen Endempfänger (Endbegünstigter) oder einen Absender.

Ein Buchungszentrum umfasst das Stammhaus oder andere juristische Personen (legal entity). Sämtliche Verträge und Geschäftsfälle gehören immer zu einem Buchungszentrum in dem diese geführt werden. Für jede juristische Personen gibt es ein Buchungszentrum, das an die lokalen Behörden eine Bilanz abzuliefern hat.

Ein Hauptbuch (Ledger) ist ein Buchwerk, in dem Kapitalien, Bestände, Forderungen und Verbindlichkeiten, sowie aufgelaufener Aufwand und Ertrag nach den Regeln der doppelten Buchführung registriert werden. Eine juristische Person kann mehrere Hauptbuch haben, muss jedoch mindestens einen Hauptbuch besitzen. Eine juristische Person kann keine, eine oder mehrere Niederlassungen haben, und jede Niederlassungen kann wiederum mehrere Hauptbuch haben. Hauptbuch sind nur relevant für die jeweiligen juristischen Personen.
a) Es gibt Geschäftsfälle, die ein Kunde / Partner oder dessen Bevollmächtigter in Auftrag geben. Hierbei handelt es sich um Aufträge, welche vom Kunden (oder einem Bevollmächtigten des Kunden) durch eine explizite Willensäußerung oder durch eine Instruktion erteilt werden.
b) Es gibt Geschäftsfälle, die durch Dritte ausgelöst wurden (zu Gunsten oder zu Lasten vom Kunden). Dies können zum Beispiel Eingänge von außerhalb der Beziehung Kunde/Partner ←→ Bank / Institution, also vom Markt (z.B. Zahlungseingang, Lastschrift) sein.
c) Es gibt Geschäftsfälle, die aufgrund von vertraglichen Bedingungen durch die Bank ausgelöst wurden (z.B. Zinsabschluss, Preisabschluss, etc) oder aufgrund von Markt-Ereignissen (z.B. Dividendenzahlung, etc.) entstehen.

Die Abwicklung dieser drei Arten von Vorgängen a) - c) erfolgt unter Berücksichtigung der mit dem jeweiligen Kunden / Partner bestehenden Vertrag und den darin enthaltenen oder ihn bildenden Metadaten, Produktvorlagen, Basisleistungsdefinitionen, Attributen, Werten, Wertebereichen, Validierungs-Regeln, und/oder Abgabe-Regeln.

Aufgrund der verschiedenen möglichen Arten von Vorgängen können von Geschäftsfällen betroffene Verträge nur über die Buchung bzw. über das Assetpaket gefunden werden. Daher werden zuerst die in einem Vertrag definierten Konti / Depots festgestellt und dann damit die Buchungen bzw. Assetpakete ermittelt. Erst dann steht der Umfang des Geschäftsfalls fest und kann angezeigt/abgearbeitet werden. (Noch) Nicht verbuchte Geschäftsfälle können somit nicht bzw. nicht in jedem Fall bzw. nur mit eingeschränkten Möglichkeiten (System-Performanz) gefunden werden.

Diese Vorgehensweise stellt sicher, dass der Kunde bei jedem Auftrag und bei jedem Eingang immer einen Geschäftsfall hat, der auch über den jeweiligen, ihn betreffenden Vertrag aufzufinden ist. Es besteht eine einheitliche Struktur und Erscheinung aller Vorgänge, unabhängig davon, ob eine Gutschrift von aussen oder ob eine Gutschrift von einem anderen Bankkunden kommt. Weiterhin ist eine Entkoppelung des Geschäftsfalles (und der daraus resultierenden Buchungen) vom Auftraggeber und dem Begünstigten möglich. Auch eine zeitliche Entkoppelung der Geschäftsfälle ist möglich. Ein Storno auf der Begünstigtenseite kann vorgenommen werden, ohne dass der Auftraggeber (oder andere Begünstigte; Sammelauftrag) betroffen ist. Es können sowohl auf Auftraggeber- wie auch auf Begünstigten-Seite Dienstleistungspreise ermittelt werden, welche auf dem jeweiligen Vertrag basieren und alsdann auf der jeweiligen Seite zur Belastung gelangen.

Wenn die Bank von einem Kunden einen Auftrag entgegennimmt, so führt dieser Auftrag zu einem Geschäftsfall, der in einer Datenbank registriert wird. Wenn die Bank zu Gunsten eines Bank-Kunden von aussen (also von einem Marktpartner) einen Auftrag entgegennimmt, so führt auch dies zu einem Geschäftsfall, der in der Datenbank registriert wird. Auch Lastschriften werden wie Zahlungseingänge behandelt (d.h. führen ebenfalls zu einem registrierten Geschäftsfall.) Beide Situationen (Aufträge / Eingänge) führen bei der Ausführung des Geschäftsfalls zu Vermögensveränderungen beim Kunden.

Wenn die Bank von einem Kunden einen Auftrag entgegennimmt, so führt dies zu einem Geschäftsfall, der registriert wird. Stellt dieser Auftrag eine Vergütung an einen anderen Bank-Kunden in demselben Buchungszentrum dar, so wird der Eingang beim Begünstigten wie ein Eingang vom Markt behandelt und auch so dokumentiert / registriert.

Wenn die Bank von einem Kunden einen Auftrag entgegennimmt, welcher zu einem Übertrag innerhalb der Konti / Depots desselben Kunden (in demselben Buchungszentrum) führt, so wird für den gleichzeitigen Auftrag und Eingang nur ein einziger Geschäftsfall registriert. Mit anderen Worten werden Aufträge mit gleichzeitigem Eingang, bei denen sich am (gesamten) Kundenvermögen desselben Kunden/Buchungszentrum (als Ganzes) nichts ändert, werden mit lediglich einem Geschäftsfall registriert / dokumentiert. Dies führt zu einem Geschäftsfall und einer Geschäftstransaktion mit 'n' Assetpaketen. Als Kundenvermögen wird nicht das Portfolio bezeichnet. Unter dem Begriff 'Kundenvermögen' wird die Summe des Vermögens des gesamten Kunden (Partner in der Rolle Kunde aus Sicht der Bank) innerhalb desselben Buchungszentrum verstanden. Sofern der Kunde zwei (nicht miteinander verbundene) Partner-Einträge besitzt, obschon es sich um dieselbe Person handelt, dann wird die Situation als eine Partner-Überschreitung behandelt.

Wenn die Bank von einem Kunden einen Auftrag entgegennimmt, welcher zu einem Übertrag an einen anderen Kunden desselben Buchungszentrum führt, so wird für den gleichzeitigen Auftrag und Eingang nur ein einziger Geschäftsfall registriert / dokumentiert.

Aufträge mit gleichzeitigem Eingang, die einen integralen Charakter haben (z.B. Börsenkauf), d.h. wo sich z.B. die Gutschriftenseite von der Belastungsseite aus Geschäftsgründen nicht trennen lässt, können mit lediglich einem Geschäftsfall registriert / dokumentiert werden. Dies führt zu einem Geschäftsfall und einer Geschäftstransaktion mit 'n' Assetpaketen. Die Avisierung erfolgt sowohl auf der Belastungs- als auch auf der Gutschriftenseite für die am Geschäftsfall beteiligten Partner.

Aufgrund von Verträgen durch die Bank ausgelöste Aufträge (z.B. Preisabschluss, Zinsabschluss, Dividendenzahlung, etc) führen zu einem registrierten / dokumentierten Geschäftsfall. Für ausgelöste Aufträge, welche in der Bank aufgrund eines Vertrages für den Partner entstehen führen zu einem registrierten / dokumentierten Geschäftsfall. Der aufgrund des Vertrages ausgelöste Geschäftsfall wird ähnlich wie ein vom Kunden erteilter Auftrag behandelt. Aufgrund von Verträgen durch die Bank ausgelöste Aufträge (z.B. Preisabschluss, Zinsabschluss) führen zu einem Geschäftsfall, welcher direkt innerhalb der Konti / Depots des Kunden gebucht werden.

Für ausgelöste Aufträge, welche in der Bank aufgrund eines Vertrages für den Partner entstehen führen zu einem Geschäftsfall, der registriert / dokumentiert wird. Aufgrund einer Umbuchungsinstruktion wird der Betrag jedoch auf ein anderes Konto eines anderen Bank-Kunden umgebucht, was mit einem über die Instruktion initiierten Geschäftsfall registriert / dokumentiert wird, welcher direkt innerhalb der Konti / Depots des Kunden gebucht wird. Erträge werden immer an der Quelle festgehalten und bei Bedarf mittels Zahlungsauftrag einem anderen Begünstigten zugeführt (d.h. via Buchungsinstruktionen erteilte (implizite) Aufträge von Kunden führen zu einem Geschäftsfall, der registriert / dokumentiert wird.

Der Eingang (oder der Ausgang) beim Begünstigten wird wie ein Eingang vom Markt behandelt und auch so als Geschäftsfall registriert / dokumentiert. Eingänge zu Gunsten / Lasten eines Bank-Kunden führen zu einem registrierten / dokumentierten Geschäftsfall. Der Geschäftsfall muss sich immer auf ein Konto / Depot auswirken.

Aufgrund eines Vertrages durch die Bank ausgelöste Aufträge (z.B. Dividendenzahlung, etc.) führen zu einem registrierten / dokumentierten Geschäftsfall, der direkt auf dem Konto des entsprechenden End-Begünstigten gebucht wird. Für ausgelöste Aufträge mit integralem Charakter, welche aufgrund eines Vertrages für den Partner entstehen, führen zu einem registrierten / dokumentierten Geschäftsfall. Diese Geschäfte werden direkt gebucht, auch wenn es sich dabei um einen anderen Kunden (Partner) desselben Buchungszentrum handelt. Der Geschäftsfall hat stets Auswirkungen auf ein Konto / Depot.

Aufgrund von Verträgen durch die Bank ausgelöste Aufträge (z.B. Dividendenzahlung, etc.) führen zu einem registrierten / dokumentierten Geschäftsfall, welche jedoch nicht direkt auf einem Konto des entsprechenden Kunden gebucht werden. Für ausgelöste Aufträge, welche in der Bank aufgrund eines Vertrages für den Partner entstehen führen zu einem registrierten / dokumentierten Geschäftsfall. Der Geschäftsfall hat stets Auswirkungen auf ein Konto / Depot.

Eine Gutschrift wird anstelle auf einem Kundenkonto auf einem Abwicklungskonto der Bank (selbst) gebucht und führt dort als Eingang zu einem registrierten / dokumentierten Geschäftsfall. Eingänge zu Gunsten/Lasten eines Bank-Kunden führen zu einem registrierten / dokumentierten Geschäftsfall.

Der durch die Umbuchungsinstruktion implizit erteilte Auftrag wird auf dem Bank-Abwicklungskonto als Geschäftsfall registriert / dokumentiert. Erträge werden immer an der Quelle festgehalten und bei Bedarf mittels Zahlungsauftrag einem anderen Begünstigten zugeführt (d.h. via Buchungsinstruktionen erteilte (implizite) Aufträge von Kunden führen zu einem registrierten / dokumentierten Geschäftsfall.

Der Eingang (od. Ausgang) beim Begünstigten wird wie ein Eingang vom Markt behandelt und auch so als Geschäftsfall registriert / dokumentiert. Eingänge zu Gunsten/Lasten eines Bank-Kunden führen zu einem registrierten / dokumentierten Geschäftsfall.

Wenn die Bank von einem Kunden einen Auftrag entgegennimmt, so führt dieser Auftrag zu einem registrierten / dokumentierten Geschäftsfall. Aufträge von Kunden führen zu einem registrierten / dokumentierten Geschäftsfall.

Erfolgt die Vergütung in einer anderen Währung als die Belastung auf dem Konto, so wird ein induziertes Fremdwährungsgeschäft erstellt. Dieses induzierte Fremdwährungsgeschäft wird als separater Geschäftsfall dokumentiert. Der induzierte Geschäftsfall / -Transaktion hat einen eigenen Lebenszyklus. Der induzierte Geschäftsfall / -Transaktion ist im Falle eines Storno rückgängig gemacht werden, d.h. die Details des induzierten Geschäftsfalls / -Transaktion werden für den Storno benötigt.

Für jeden expliziten Kundenauftrag (Willensäusserung des Kunden) wird ein Geschäftsfall. Für jeden Eingang eines Auftrages vom Markt für einen Bank-Kunden wird ein Geschäftsfall registriert / dokumentiert. Der Eingang eines Auftrages vom Markt kann sowohl eine Gutschrift wie auch eine Lastschrift sein. Falls ein Bank-Kunde einem anderen Bank-Kunden (unterschiedliche Partner) Vermögenswert(e) zukommen lässt, so führt dies sowohl auf der Auftraggeber-Seite als auch auf der Empfänger-Seite zu je einem registrierten / dokumentierten Geschäftsfall. Für einen Übertrag oder Umtausch von Vermögenswert(en) innerhalb desselben Kunden (Partner) in demselben Buchungszentrums (Konto-/Depot-Übertrag bzw. Handelsgeschäfte innerhalb desselben Partners) wird ein einziger registrierter / dokumentierter Geschäftsfall erstellt, der beide Aspekte enthält.

Geschäftsfälle, deren Aus- und Eingänge aus geschäftlichen Gründen nicht getrennt werden können, können als ein einziger registrierter / dokumentierter Geschäftsfall abgelegt werden, auch wenn sie verschiedene Kunden betreffen.

Geschäftsfälle, welche aufgrund von Instruktionen (z.B. Umbuchungsinstruktionen) ausgelöst werden, werden ebenfalls mit einem Geschäftsfall dokumentiert / registriert. Geschäftsfälle, welche aufgrund von vertraglichen Regeln oder aufgrund von Markt-Konstellationen ausgelöst werden, führen zu einem registrierten / dokumentierten Geschäftsfall.

Diese Vorgehensweise führt zu einer erheblichen Reduktion des Datenvolumens der registrierten / dokumentierten Geschäftsfälle (bei den Positionen, wie auch bei den Buchungen und Assetpaketen) im Vergleich zum herkömmlichen Lösungsansätzen. Sowohl für die kundenorientierten Buchungen wie auch für die Buchungen auf interne Konti / Depots muss ein Assetpaket erstellt werden. Diese 'internen' Assetpakete werden heute entweder als separate 'Hilfs-Geschäftsfälle' oder alternativ im regulären Kunden-Geschäftsfall dokumentiert (d.h. eine einzelne Transaktion mit sämtlichen aus dem Geschäft resultierenden Buchungen) Nach herkömmlicher Vorgehensweise werden aufgrund von Buchungen 'Hilfs-Geschäftsfälle' erstellt (d.h. ein Geschäftsfall wird mit 'n' 'Hilfs-Geschäftsfällen' abgebildet).

Ein Computer-Softwareprogramm Auftragsmanager ist zum Beispiel zuständig für die Abdeckung des Kundenstammdatenprozesses im Bereich Vertragsabwicklung; delegiert das Anlegen der Verträge, erzeugt Instruktionen und weist ggf. Sonderkonditionen und Preise zu im Bereich Konto, Depot und Safe aus; ermöglicht das Anlegen und Verwaltung von Verträgen im Bereich eBanking; ermöglicht das Anlegen und Verwaltung von Verträgen im Bereich Financing; ermöglicht das Anlegen und Verwaltung von Verträge im Bereich Investment; nimmt Vorsorgeanträge entgegen und verwaltet die Fremd-Kontrakt Erstellung; ermöglicht Anlegen und Verwaltung von Verträgen im Bereich Cash Management auf Kundenseite; führt eine Abwicklung sämtlicher Archiv-Geschäftsfälle im Hinblick auf gesetzliche Vorschriften aus; führt eine Abwicklung sämtlicher Archiv Geschäftsfälle im Hinblick auf die Betriebsabwicklung aus; und oder führt eine Abwicklung sämtlicher Karten-Geschäftsfälle gegenüber dem Kunden aus.

Das Computer-Softwareprogramm Auftragsmanager ist weiterhin zum Beispiel zuständig für Geschäftsfälle gegenüber dem Kunden (Auftragsannahme, -verwaltung, -auslösung, etc.); löst periodische Aufträge aus; dokumentiert Geschäftsfälle; delegiert die Durchführung an die Basisleistungserbringer; übernimmt die Abwicklung eines Kredit-Geschäftsfalls (Auftragsannahme, -verwaltung, -auslösung, etc.); löst Block- und Sammel-Aufträge aus, führt periodisch oder auf Auftrag einen Ausgleich (Rebalancing) durch; übernimmt für Fehlbuchungen auf Abklärungskonti die Richtigstellung; dokumentiert die Umbuchungen; übernimmt aperiodische Zinsabschlüsse gegenüber dem Kunden (Auftragsannahme, -verwaltung, -auslösung etc.); übernimmt Wertschriftenaufträge gegenüber dem Kunden (Auftragsannahme, - verwaltung, -auslösung, etc.).

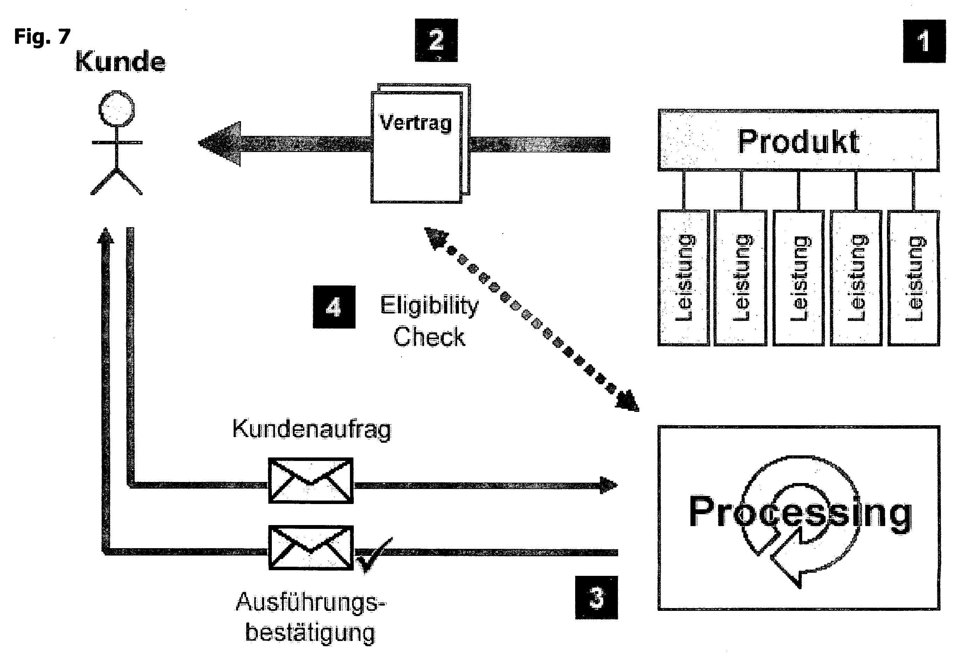

In Fig. 7 ist veranschaulicht, wie eine operative Institution, zum Beispiel eine Bank aus (Basis-)Leistungen konfigurierte Produkte bereitstellt, diese Produkte an ihre Kunden im Rahmen von Verträgen verkauft und diese Verträge im Rahmen von Kundenaufträgen abwickelt. Das Bezugszeichen 1 bezieht sich auf ein (bankfachliches) Produkt, das definiert ist durch die (Basis-)Leistung/en, welche ein Kunde / Partner beziehen kann, wenn er dieses Produkt erwirbt / diese Dienstleistung von der Institution (Bank) in Anspruch nimmt. Das Bezugszeichen 2 bezieht sich auf den Vorgang, dass ein Produkt / diese Dienstleistung an einen Kunden verkauft wird, so werden die Regeln der Nutzung des Produktes / dieser Dienstleistung in einem Vertrag geregelt. Das Bezugszeichen 3 bezieht sich auf den Vorgang, dass auf der Grundlage des Vertrages der Kunde der Institution (Bank) Aufträge zur Ausführung erteilen kann. Das Bezugszeichen 4 bezieht sich auf den Vorgang, dass die Auftragsmanagerkomponente vor der Ausführung prüft, ob der Auftraggeber berechtigt ist, den Auftrag zu erteilen (Eligibility Check): (i) Ist der Vertrag aktiv? (ii) Ist die Person berechtigt / bevollmächtigt? (iii) Ist die verlangte Leistung Teil des Vertrages? (iv) etc.... Diese Berechtigungsprüfung ist eine harte - nicht übersteuerbare - Prüfung, ob
a) das konkret angefragte Produkt/die Basisleistung einem Partner verkauft werden darf, und/oder
b) der konkret angefragte / in Auftrag gegebene Geschäftsfall, Auftrag im Rahmen einer vertraglichen Abmachung mit dem jeweiligen Kunden/ Partner abgewickelt werden darf.

Diese durch die Auftragsmanagerkomponente ausgeführte Berechtigungsprüfung (Eligibility Check) ist in Abgrenzung zu einer Eignungsprüfung zu sehen (Suitability Check), welche eine weiche - übersteuerbare - Prüfung wäre, ob das Produkt / die Basisleistung für einen Partner geeignet ('passend') ist.

Eine durch die Auftragsmanagerkomponente ausgeführte Verfügbarkeitsprüfung (Availability Check) dient dazu, zum Zeitpunkt, zu dem / während ein Auftrag durch das Computersystem abgearbeitet wird, zu prüfen, ob die jeweilige/n Basisleistung/en, aus denen das Produkt konfiguriert ist, sowie der Vertrag, der aus dem Produkt konfektioniert wurde, den konkreten Auftrag erlauben: (i) Ist die Deckungssumme des Kontos ausreichend, um den Auszahlungsauftrag auszuführen? (ii) Hat der Kunde bei der Bank ein Depot, in das eine Wertschrift aufgenommen werden kann, ... (iii) Ist der Kunde berechtigt, Wertschriften - zum Beispiel bestimmter Risikoklassen - zu erwerben?

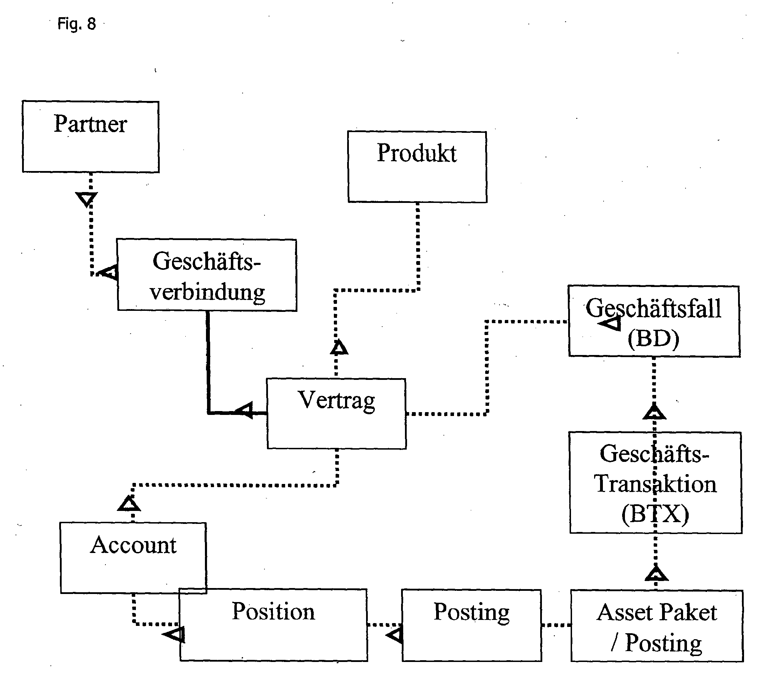

Dabei können durch die Auftragsmanagerkomponente im Rahmen von Unterprozessen der Vertragsmanager gestartet und abgearbeitet werden, um zum Beispiel selbsttätig Konten zu eröffnen, bestimmte Inventmentlösungen bereit zu stellen, etc. Die Beziehungen der einzelnen Komponenten sind im Überblick in Fig. 8 veranschaulicht.

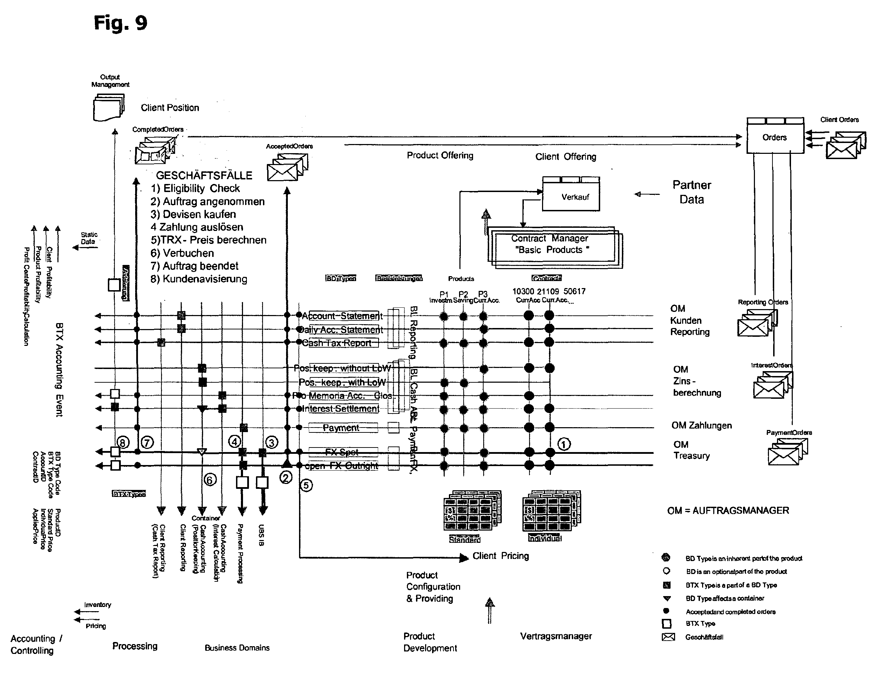

Im einzelnen läuft der Vorgang wie in Fig. 9 veranschaulicht ab.

Der Kunde / Partner erteilt der Bank / Institution einen Auftrag über einen der vertraglich vereinbarten elektronischen Kanäle betreffend einen Vorgang zu einer Geschäftsgegenstand, wie zum Beispiel ein Konto / Depot.

Der Auftragsmanager prüft die "Berechtigung" des Auftrages (Eligibility Check) anhand des dem Konto / Depot zugrunde liegenden Vertrages. Im positiven Fall wird ein neuer Geschäftsfall in einer Kunden- / Partnerpositionsdatenbank eröffnet.

Der Auftragsmanager prüft, ob die jeweilige/n Basisleistung/en, aus denen das Produkt konfiguriert ist, sowie der Vertrag, der aus dem Produkt konfektioniert wurde, für den konkreten Auftrag verfügbar sind (Availability Check). Falls nein, wird der Geschäftsfall abgebrochen.

Der Auftragsmanager leitet die Ausführung des Auftrages ein führt den Zahlungsauftrag aus, ermittelt die Spesen und belastet'den Geldbetrag und die Spesen dem Lastkonto des Kunden gemäss Auftrag.

Der Geschäftsfall wird über eine Standardschnittstelle an das Kontoführungsprogramm zur Verbuchung übergeben und gleichzeitig in einem (gesetzlichen Vorschriften entsprechenden ) Archiv abgelegt.

Über ein Ausgabeprogramm wird der Kunde über den Vollzug seines Auftrages informiert. Der Status des Geschäftsfalls wird in der Kundenpositionsdatenbank auf 'abgeschlossen' gesetzt.

Jeder Vertrags- oder Auftragsmanager liest zur Laufzeit bei der Auftragsabwicklung die jeweiligen Basisleistungen im Rahmen einer automatisierten Regelprüfung aus, durch die die Ausführung des entsprechenden Geschäftsfalles gesteuert wird. Der Vertrags- oder Auftragsmanager kann die Prüfung anhand der sog. Geschäftsfall-ID (ID = Identifikationskennung / -Nummer) oder der Geschäftsfall-Type ID automatisiert abarbeiten und ggfs. die Prüfung gemäß vorherbestimmter Regelwerke anstoßen, die der Produktdatenbank zugeordnet sind.

## Patentansprüche

1. Computer-implementiertes System zur Erzeugung, Bearbeitung und Verwaltung von strukturierten Datensätzen, wobei in diesem System eine Computersoftwareprogramm-Komponente Auftragsmanager vorgesehen ist, um einen Geschäftsfall unter Berücksichtigung eines zwischen einer Institution und einem jeweiligen Kunden / Partner bestehenden Vertrages abzuwickeln, wobei der Vertrag einen Vertragskopf und wenigstens eine Basisleistung aufweist, die aus einer Produktvorlage abgeleitet sind, wobei die Abwicklung durch den Auftragsmanager eine Prüfung von Einzelheiten des jeweiligen Geschäftsfalls auf die Einhaltung von Regeln umfasst, die in Bezug auf die Basisleistungen und Geschäftsfälle diesen zugeordnet in einer Regelbasis definiert und elektronisch gespeichert sind.

2. Das computer-implementierte System zur Erzeugung, Bearbeitung und Verwaltung von strukturierten Datensätzen nach Anspruch 1, wobei in diesem System die Abwicklung von Aufträgen erfolgt unter Berücksichtigung der mit dem jeweiligen Kunden / Partner bestehenden Vertrag und den darin enthaltenen oder ihn bildenden Metadaten, Produktvorlagen, Basisleistungsdefinitionen, Attributen, Werten, Wertebereichen, Validierungs-Regeln, und/oder Abgabe-Regeln.

3. Das computer-implementierte System zur Erzeugung, Bearbeitung und Verwaltung von strukturierten Datensätzen nach einem der vorhergehenden Ansprüche, wobei in diesem System ein Vertragsmanager aus einem Produktvorlagenverzeichnis, in dem die Strukturen der Produktvorlagen in strukturierter Weise abgelegt sind, eine Produktvorlage zur Individualisierung aufruft und diese spezifisch ergänzt, indem entweder wenigstens ein vorgesetzter Wert zu übernehmen ist oder ein Wert innerhalb eines zugelassenen Bereiches auszuwählen ist, und ein einen Vertrag wiedergebendes individualisiertes Vertragsdokument erzeugt und das Anlegen dieses Vertrages in einer Datenbank und dessen technische Abwicklung angestoßen wird.

4. Das computer-implementierte System zur Erzeugung, Bearbeitung und Verwaltung von strukturierten Datensätzen nach einem der vorhergehenden Ansprüche, wobei in diesem System bei einer Auftragsabwicklung die Einhaltung von Regeln überprüft wird, die jeweils ein eigenständiges Objekt mit eigener Kennzeichnung und einem beschreibenden Text sind, wobei diese Regeln durch eine Regelbasis zur Verfügung gestellt werden und durch sie bestimmt wird, welche Bedingungen zu erfüllen sind, damit der Auftrag, wie von einem Kunden/Partner gewünscht, im Rahmen eines Vertrages zwischen dem Kunden / Partner und der Bank abgewickelt wird.

5. Das computer-implementierte System zur Erzeugung, Bearbeitung und Verwaltung von strukturierten Datensätzen nach einem der vorhergehenden Ansprüche, wobei in diesem System die Abwicklung von Aufträgen unter Berücksichtigung der mit dem jeweiligen Kunden / Partner bestehenden Vertrag und den darin enthaltenen oder ihn bildenden Metadaten, Produktvorlagen, Basisleistungsdefinitionen, Attributen, Werten, Wertebereichen, Validierungs-Regeln, und/oder Abgabe-Regeln erfolgt.

6. Das computer-implementierte System zur Erzeugung, Bearbeitung und Verwaltung von strukturierten Datensätzen nach einem der vorhergehenden Ansprüche, wobei in diesem System aufgrund der verschiedenen möglichen Arten von Vorgängen von Geschäftsfällen betroffene Verträge nur über die Buchung bzw. über ein Assetpaket gefunden werden, wobei zuerst die in einem Vertrag definierten Konti / Depots festgestellt und dann damit die Buchungen bzw. Assetpakete ermittelt werden, wonach der Umfang des Geschäftsfalls feststeht und angezeigt / abgearbeitet / registriert werden kann.

7. Das computer-implementierte System zur Erzeugung, Bearbeitung und Verwaltung von strukturierten Datensätzen nach einem der vorhergehenden Ansprüche, wobei in diesem System ein Geschäftsfall
(i) durch einen Kunden / Partner oder dessen Bevollmächtigten mittels einer expliziten Willensäußerung oder durch eine Instruktion,
(ii) durch Dritte zu Gunsten oder zu Lasten des Kunden / Partner außerhalb der Beziehung zwischen Kunde / Partner und der Institution, oder
(iii) durch vertragliche Bedingungen durch die Institution ausgelöst wird, oder aufgrund von Markt-Ereignissen entsteht.

8. Das computer-implementierte System zur Erzeugung, Bearbeitung und Verwaltung von strukturierten Datensätzen nach einem der vorhergehenden Ansprüche, wobei in diesem System
- ein Kunde / Partner der Institution einen Auftrag über einen der vertraglich vereinbarten elektronischen Kanäle erteilt,
- die Computersoftwareprogramm-Komponente Auftragsmanager die Berechtigung des Auftrages anhand des zugrunde liegenden Vertrages prüft und im positiven Fall einen neuen Geschäftsfall in einer Kundenpositionsdatenbank eröffnet,
- die Computersoftwareprogramm-Komponente Auftragsmanager prüft, ob die jeweilige/n Basisleistung/en, aus denen das Produkt konfiguriert ist, sowie der Vertrag, der aus dem Produkt konfektioniert wurde, für den konkreten Auftrag verfügbar sind und im negativen Fall den Geschäftsfall abbricht,
- der Auftragsmanager die Ausführung des Auftrages einleitet und den Auftrag ausführt,
- der Auftragsmanager den Geschäftsfall an eine Datenbankbewirtschaftungskomponente zur Verbuchung übergibt und die zugehörigen Daten in einem Archiv ablegt, und
- eine Ausgabeprogrammkomponente den Kunden / Partner über den Vollzug seines Auftrages informiert.

9. Das computer-implementierte System zur Erzeugung, Bearbeitung und Verwaltung von strukturierten Datensätzen nach einem der vorhergehenden Ansprüche, wobei in diesem System
- der Auftragsmanager bei der Auftragsabwicklung jeweilige Basisleistungen im Rahmen einer automatisierten Regelprüfung aus einer Datenbank ausliest, durch welche die Ausführung des entsprechenden Geschäftsfalles gesteuert wird,
- der Auftragsmanager die Prüfung anhand einer sog. Geschäftsfall-ID oder einer Geschäftsfall-Typ ID automatisiert abarbeitet und die Prüfung gemäß vorherbestimmter Regelwerke anstößt, die einer Produktdatenbank zugeordnet sind.

10. Das computer-implementierte System zur Erzeugung, Bearbeitung und Verwaltung von strukturierten Datensätzen nach einem der vorhergehenden Ansprüche, wobei in diesem System
- eine Produktvorlage eine oder mehrere zwingend zu einem Produkt gehörende Basisleistungen und eine oder mehrere ausdrücklich zu einem Produkt dazu- oder abzuwählende Basisleistungen umfasst.

11. Das computer-implementierte System zur Erzeugung, Bearbeitung und Verwaltung von strukturierten Datensätzen nach einem der vorhergehenden Ansprüche, wobei in diesem System
- jeder Basisleistungsvertrag auf den in einer Produktvorlage definierten Basisleistungen basiert.

12. Das computer-implementierte System zur Erzeugung, Bearbeitung und Verwaltung von strukturierten Datensätzen nach einem der vorhergehenden Ansprüche, wobei in diesem System die Regeln Alters-, Domizil-, Kundensegment-, und/oder rechtliche Einschränkungen umfassen.

13. Das computer-implementierte System zur Erzeugung, Bearbeitung und Verwaltung von strukturierten Datensätzen nach einem der vorhergehenden Ansprüche, wobei in diesem System die Regeln in dem Vertrag nicht zu übersteuern sind.

14. Das computer-implementierte System zur Erzeugung, Bearbeitung und Verwaltung von strukturierten Datensätzen nach einem der vorhergehenden Ansprüche, wobei in diesem System die Regeln mit rechtlichen Einschränkungen zwingend bei der Produktkonfiguration in den Vertrag zu übernehmen sind.

15. Das computer-implementierte System zur Erzeugung, Bearbeitung und Verwaltung von strukturierten Datensätzen nach einem der vorhergehenden Ansprüche, wobei in diesem System Validierungsregeln vorgesehen sind, um zu prüfen, ob in dem Vertrag Werte oder -Bereiche von Attributen eingehalten werden, oder ob Eingaben in Feldern im Verhältnis zu den jeweiligen Feldformaten korrekt sind.

16. Das computer-implementierte System zur Erzeugung, Bearbeitung und Verwaltung von strukturierten Datensätzen nach einem der vorhergehenden Ansprüche, wobei in diesem System die Validierungsregeln der Prüfung dienen, ob in dem Vertrag Werte oder -Bereiche von Attributen eingehalten werden, oder ob Eingaben in Feldern im Verhältnis zu den jeweiligen Feldformaten korrekt sind, und als Ergebnis "OK/NOK" zurückgeben wird.

17. Das computer-implementierte System zur Erzeugung, Bearbeitung und Verwaltung von strukturierten Datensätzen nach einem der vorhergehenden Ansprüche, wobei in diesem System eine oder mehrere Validierungsregeln vorgesehen sind, die zur Individualisierung eines Vertrages eine Vorauswahl und Prüfung von Produktvorlagen vornehmen, für die für einen Kunden / Partner eine Vertragsbeziehung zu eröffnen / zu modifizieren ist, und die bei ihrer Prüfung einen Ergebnissatz zurückgeben.

18. Das computer-implementierte System zur Erzeugung, Bearbeitung und Verwaltung von strukturierten Datensätzen nach einem der vorhergehenden Ansprüche, wobei in diesem System zur Individualisierung eines Vertrages eine oder mehrere Validierungsregeln zur Ermittlung einer kunden- / partnerspezifischen Voreinstellung (Default) vor oder in der Darstellung auf einer graphischen oder alphanumerischen Benutzeroberfläche vorgesehen sind.

19. Das computer-implementierte System zur Erzeugung, Bearbeitung und Verwaltung von strukturierten Datensätzen nach einem der vorhergehenden Ansprüche, wobei in diesem System Validierungsregeln zur Prüfung der Einhaltung eines Wertes oder Wertebereichs oder eines Datensatzes zur Sicherstellung der Verarbeitbarkeit einer Basisleistung dienen, wobei die zu prüfenden Werte/ Wertebereiche/Datensätze in der jeweiligen Produktvorlage vorgegeben sind.

20. Das computer-implementierte System zur Erzeugung, Bearbeitung und Verwaltung von strukturierten Datensätzen nach einem der vorhergehenden Ansprüche, wobei in diesem System die zu einem Vertrag gehörenden Daten so bewirtschaftet werden, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

21. Das computer-implementierte System zur Erzeugung, Bearbeitung und Verwaltung von strukturierten Datensätzen nach einem der vorhergehenden Ansprüche, wobei in diesem System eine Änderung eines Attributes des Vertragskopfes ein Erzeugen eines neuen Eintrages in dem Vertragskopf auslöst.

22. Das computer-implementierte System zur Erzeugung, Bearbeitung und Verwaltung von strukturierten Datensätzen nach einem der vorhergehenden Ansprüche, wobei in diesem System wenigstens ein abgeleitetes Attribut im Vertragskopf gespeichert ist, wobei eine Änderungen eines abgeleiteten Attributes kein Erzeugen eines neuen Eintrages in dem Vertragskopf auslöst, sondern eine Aktualisierung dieses Attributs erfolgt.

23. Das computer-implementierte System zur Erzeugung, Bearbeitung und Verwaltung von strukturierten Datensätzen nach einem der vorhergehenden Ansprüche, wobei in diesem System eine Änderung eines Attributes eines Basisleistungsvertrages ein Erzeugen eines neuen Eintrages in dem Basisleistungsvertrag auslöst und/oder eine Aktualisierung dieses Attributs im Vertragskopf erfolgt.

24. Das computer-implementierte System zur Erzeugung, Bearbeitung und Verwaltung von strukturierten Datensätzen nach einem der vorhergehenden Ansprüche, wobei in diesem System beim Erzeugen eines individualisierten Vertragskopfes und/oder eines Basisleistungsvertrages eine Referenz auf eine Produktvorlage oder eine spezifische Basisleistungen für die jeweilige Produktvorlage erzeugt wird.

25. Das computer-implementierte System zur Erzeugung, Bearbeitung und Verwaltung von strukturierten Datensätzen nach einem der vorhergehenden Ansprüche, wobei in diesem System die Softwareprogramm-Komponente Auftragsmanager zum Aufruf einer Regel eine Regel-ID sowie Eingabewerte für die Regel erhält, womit ein generischer Regeltreiber aufgerufen wird, der eine Regeltabelle liest.

26. Das computer-implementierte System zur Erzeugung, Bearbeitung und Verwaltung von strukturierten Datensätzen nach einem der vorhergehenden Ansprüche, wobei in diesem System die Überprüfung der Einhaltung der Regel statisch oder dynamisch ausgeführt wird.

27. Das computer-implementierte System zur Erzeugung, Bearbeitung und Verwaltung von strukturierten Datensätzen nach einem der vorhergehenden Ansprüche, wobei in diesem System der Regeltreiber Daten zu einer Geschäftsbeziehungs-ID und die Regelverwendung mit Produktvorlagen-ID liest, und ein Regel-Programm mit folgender Schnittstelle aufruft: Attribute zur Geschäftsbeziehungs-ID, und Produktvorlagen-ID, und das Regel-Programms als Ergebnis OK/NOK zurückgibt.

28. Das computer-implementierte System zur Erzeugung, Bearbeitung und Verwaltung von strukturierten Datensätzen nach einem der vorhergehenden Ansprüche, wobei in diesem System
- die Softwareprogramm-Komponente Auftragsmanager Funktionalitäten zur Durchführung von Aufträgen betreffend die Kunden-/Partner-relevanten Kunden-Verträge bereitstellt,
- zur Durchführung der Aufträge sind Regeln auf der Ebene der Produktvorlagen implementiert sind,
- eine Regel ein eigenständiges Objekt mit eigener Kennzeichnung und einem beschreibenden Text ist,
- die Regeln durch eine Regelbasis zur Verfügung gestellt werden,
- durch eine Regel bestimmt wird, welche Bedingungen zu erfüllen sind, damit einem Kunden / Partner ein Produkt mit der jeweiligen Basisleistung zugänglich gemacht wird,
- zwischen einer Regel und ihrer zugeordneten Basisleistung eine Beziehung hergestellt wird, und
- Regeln auch übergreifend über mehrere Basisleistungen einer Produktvorlage eingesetzt werden.

29. Computer-implementiertes Verfahren zur Erzeugung, Bearbeitung und Verwaltung von strukturierten Datensätzen, wobei in diesem Verfahren eine Computersoftwareprogramm-Komponente Auftragsmanager vorgesehen ist, um einen Geschäftsfall unter Berücksichtigung eines zwischen einer Institution und einem jeweiligen Kunden / Partner bestehenden Vertrages abzuwickeln, wobei der Vertrag einen Vertragskopf und wenigstens eine Basisleistung aufweist, die aus einer Produktvorlage abgeleitet werden, wobei die Abwicklung durch den Auftragsmanager eine Prüfung von Einzelheiten des jeweiligen Geschäftsfalls auf die Einhaltung von Regeln umfasst, die in Bezug auf die Basisleistungen und Geschäftsfälle diesen zugeordnet in einer Regelbasis definiert und elektronisch gespeichert werden.

30. Das computer-implementierte Verfahren zur Erzeugung, Bearbeitung und Verwaltung von strukturierten Datensätzen nach Anspruch 1, wobei in diesem Verfahren die Abwicklung von Aufträgen erfolgt unter Berücksichtigung der mit dem jeweiligen Kunden / Partner bestehenden Vertrag und den darin enthaltenen oder ihn bildenden Metadaten, Produktvorlagen, Basisleistungsdefinitionen, Attributen, Werten, Wertebereichen, Validierungs-Regeln, und/oder Abgabe-Regeln.

31. Das computer-implementierte Verfahren zur Erzeugung, Bearbeitung und Verwaltung von strukturierten Datensätzen nach einem der vorhergehenden Ansprüche, wobei in diesem Verfahren ein Vertragsmanager aus einem Produktvorlagenverzeichnis, in dem die Strukturen der Produktvorlagen in strukturierter Weise abgelegt werden, eine Produktvorlage zur Individualisierung aufruft und diese spezifisch ergänzt, indem entweder wenigstens ein vorgesetzter Wert zu übernehmen ist oder ein Wert innerhalb eines zugelassenen Bereiches auszuwählen ist, und ein einen Vertrag wiedergebendes individualisiertes Vertragsdokument erzeugt und das Anlegen dieses Vertrages in einer Datenbank und dessen technische Abwicklung angestoßen wird.

32. Das computer-implementierte Verfahren zur Erzeugung, Bearbeitung und Verwaltung von strukturierten Datensätzen nach einem der vorhergehenden Ansprüche, wobei in diesem Verfahren bei einer Auftragsabwicklung die Einhaltung von Regeln überprüft wird, die jeweils ein eigenständiges Objekt mit eigener Kennzeichnung und einem beschreibenden Text sind, wobei diese Regeln durch eine Regelbasis zur Verfügung gestellt werden und durch sie bestimmt wird, welche Bedingungen zu erfüllen sind, damit der Auftrag, wie von einem Kunden/Partner gewünscht, im Rahmen eines Vertrages zwischen dem Kunden / Partner und der Bank abgewickelt wird.

33. Das computer-implementierte Verfahren zur Erzeugung, Bearbeitung und Verwaltung von strukturierten Datensätzen nach einem der vorhergehenden Ansprüche, wobei in diesem Verfahren die Abwicklung von Aufträgen unter Berücksichtigung der mit dem jeweiligen Kunden / Partner bestehenden Vertrag und den darin enthaltenen oder ihn bildenden Metadaten, Produktvorlagen, Basisleistungsdefinitionen, Attributen, Werten, Wertebereichen, Validierungs-Regeln, und/oder Abgabe-Regeln erfolgt.

34. Das computer-implementierte Verfahren zur Erzeugung, Bearbeitung und Verwaltung von strukturierten Datensätzen nach einem der vorhergehenden Ansprüche, wobei in diesem Verfahren aufgrund der verschiedenen möglichen Arten von Vorgängen von Geschäftsfällen betroffene Verträge nur über die Buchung bzw. über ein Assetpaket gefunden werden, wobei zuerst die in einem Vertrag definierten Konti / Depots festgestellt und dann damit die Buchungen bzw. Assetpakete ermittelt werden, wonach der Umfang des Geschäftsfalls feststeht und angezeigt / abgearbeitet / registriert werden.

35. Das computer-implementierte Verfahren zur Erzeugung, Bearbeitung und Verwaltung von strukturierten Datensätzen nach einem der vorhergehenden Ansprüche, wobei in diesem Verfahren ein Geschäftsfall
(i) durch einen Kunden / Partner oder dessen Bevollmächtigten mittels einer expliziten Willensäußerung oder durch eine Instruktion,
(ii) durch Dritte zu Gunsten oder zu Lasten des Kunden / Partner außerhalb der Beziehung zwischen Kunde / Partner und der Institution, oder
(iii) durch vertragliche Bedingungen durch die Institution ausgelöst wird, oder aufgrund von Markt-Ereignissen entsteht.

36. Das computer-implementierte Verfahren zur Erzeugung, Bearbeitung und Verwaltung von strukturierten Datensätzen nach einem der vorhergehenden Ansprüche, wobei in diesem Verfahren
- ein Kunde / Partner der Institution einen Auftrag über einen der vertraglich vereinbarten elektronischen Kanäle erteilt,
- die Computersoftwareprogramm-Komponente Auftragsmanager die Berechtigung des Auftrages anhand des zugrunde liegenden Vertrages prüft und im positiven Fall einen neuen Geschäftsfall in einer Kundenpositionsdatenbank eröffnet,
- die Computersoftwareprogramm-Komponente Auftragsmanager prüft, ob die jeweilige/n Basisleistung/en, aus denen das Produkt konfiguriert ist, sowie der Vertrag, der aus dem Produkt konfektioniert wurde, für den konkreten Auftrag verfügbar sind und im negativen Fall den Geschäftsfall abbricht,
- der Auftragsmanager die Ausführung des Auftrages einleitet und den Auftrag ausführt,
- der Auftragsmanager den Geschäftsfall an eine Datenbankbewirtschaftungskomponente zur Verbuchung übergibt und die zugehörigen Daten in einem Archiv ablegt, und
- eine Ausgabeprogrammkomponente den Kunden / Partner über den Vollzug seines Auftrages informiert.

37. Das computer-implementierte Verfahren zur Erzeugung, Bearbeitung und Verwaltung von strukturierten Datensätzen nach einem der vorhergehenden Ansprüche, wobei in diesem Verfahren
- der Auftragsmanager bei der Auftragsabwicklung jeweilige Basisleistungen im Rahmen einer automatisierten Regelprüfung aus einer Datenbank ausliest, durch welche die Ausführung des entsprechenden Geschäftsfalles gesteuert wird,
- der Auftragsmanager die Prüfung anhand einer sog. Geschäftsfall-ID oder einer Geschäftsfall-Type ID automatisiert abarbeitet und die Prüfung gemäß vorherbestimmter Regelwerke anstößt, die einer Produktdatenbank zugeordnet sind.

38. Das computer-implementierte Verfahren zur Erzeugung, Bearbeitung und Verwaltung von strukturierten Datensätzen nach einem der vorhergehenden Ansprüche, wobei in diesem Verfahren
- eine Produktvorlage eine oder mehrere zwingend zu einem Produkt gehörende Basisleistungen und eine oder mehrere ausdrücklich zu einem Produkt dazu- oder abzuwählende Basisleistungen umfasst.

39. Das computer-implementierte Verfahren zur Erzeugung, Bearbeitung und Verwaltung von strukturierten Datensätzen nach einem der vorhergehenden Ansprüche, wobei in diesem Verfahren
- jeder Basisleistungsvertrag auf den in einer Produktvorlage definierten Basisleistungen basiert wird.

40. Das computer-implementierte Verfahren zur Erzeugung, Bearbeitung und Verwaltung von strukturierten Datensätzen nach einem der vorhergehenden Ansprüche, wobei in diesem Verfahren die Regeln Alters-, Domizil-, Kundensegment-, und/oder rechtliche Einschränkungen umfassen.

41. Das computer-implementierte Verfahren zur Erzeugung, Bearbeitung und Verwaltung von strukturierten Datensätzen nach einem der vorhergehenden Ansprüche, wobei in diesem Verfahren die Regeln in dem Vertrag nicht zu übersteuern sind.

42. Das computer-implementierte Verfahren zur Erzeugung, Bearbeitung und Verwaltung von strukturierten Datensätzen nach einem der vorhergehenden Ansprüche, wobei in diesem Verfahren die Regeln mit rechtlichen Einschränkungen zwingend bei der Produktkonfiguration in den Vertrag übernommen werden.

43. Das computer-implementierte Verfahren zur Erzeugung, Bearbeitung und Verwaltung von strukturierten Datensätzen nach einem der vorhergehenden Ansprüche, wobei in diesem Verfahren mittels Validierungsregeln geprüft wird, ob in dem Vertrag Werte oder -Bereiche von Attributen eingehalten werden, oder ob Eingaben in Feldern im Verhältnis zu den jeweiligen Feldformaten korrekt sind.

44. Das computer-implementierte Verfahren zur Erzeugung, Bearbeitung und Verwaltung von strukturierten Datensätzen nach einem der vorhergehenden Ansprüche, wobei in diesem Verfahren die Validierungsregeln der Prüfung dienen, ob in dem Vertrag Werte oder -Bereiche von Attributen eingehalten werden, oder ob Eingaben in Feldern im Verhältnis zu den jeweiligen Feldformaten korrekt sind, und als Ergebnis "OK/NOK" zurückgeben wird.

45. Das computer-implementierte Verfahren zur Erzeugung, Bearbeitung und Verwaltung von strukturierten Datensätzen nach einem der vorhergehenden Ansprüche, wobei in diesem Verfahren mit einer oder mehreren Validierungsregeln zur Individualisierung eines Vertrages eine Vorauswahl und Prüfung von Produktvorlagen vorgenommen wird, für die für einen Kunden / Partner eine Vertragsbeziehung zu eröffnen / zu modifizieren ist, und die bei ihrer Prüfung einen Ergebnissatz zurückgeben.

46. Das computer-implementierte Verfahren zur Erzeugung, Bearbeitung und Verwaltung von strukturierten Datensätzen nach einem der vorhergehenden Ansprüche, wobei in diesem Verfahren zur Individualisierung eines Vertrages eine oder mehrere Validierungsregeln zur Ermittlung einer kunden- / partnerspezifischen Voreinstellung (Default) vor oder in der Darstellung auf einer graphischen oder alphanumerischen Benutzeroberfläche vorgesehen sind.

47. Das computer-implementierte Verfahren zur Erzeugung, Bearbeitung und Verwaltung von strukturierten Datensätzen nach einem der vorhergehenden Ansprüche, wobei in diesem Verfahren Validierungsregeln zur Prüfung der Einhaltung eines Wertes oder Wertebereichs oder eines Datensatzes zur Sicherstellung der Verarbeitbarkeit einer Basisleistung dienen, wobei die zu prüfenden Werte/ Wertebereiche/Datensätze in der jeweiligen Produktvorlage vorgegeben sind.

48. Das computer-implementierte Verfahren zur Erzeugung, Bearbeitung und Verwaltung von strukturierten Datensätzen nach einem der vorhergehenden Ansprüche, wobei in diesem Verfahren die zu einem Vertrag gehörenden Daten so bewirtschaftet werden, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

49. Das computer-implementierte Verfahren zur Erzeugung, Bearbeitung und Verwaltung von strukturierten Datensätzen nach einem der vorhergehenden Ansprüche, wobei in diesem Verfahren eine Änderung eines Attributes des Vertragskopfes ein Erzeugen eines neuen Eintrages in dem Vertragskopf auslöst.

50. Das computer-implementierte Verfahren zur Erzeugung, Bearbeitung und Verwaltung von strukturierten Datensätzen nach einem der vorhergehenden Ansprüche, wobei in diesem Verfahren wenigstens ein abgeleitetes Attribut im Vertragskopf gespeichert ist, wobei eine Änderungen eines abgeleiteten Attributes kein Erzeugen eines neuen Eintrages in dem Vertragskopf auslöst, sondern eine Aktualisierung dieses Attributs erfolgt.

51. Das computer-implementierte Verfahren zur Erzeugung, Bearbeitung und Verwaltung von strukturierten Datensätzen nach einem der vorhergehenden Ansprüche, wobei in diesem Verfahren eine Änderung eines Attributes eines Basisleistungsvertrages ein Erzeugen eines neuen Eintrages in dem Basisleistungsvertrag auslöst und/oder eine Aktualisierung dieses Attributs im Vertragskopf erfolgt.

52. Das computer-implementierte Verfahren zur Erzeugung, Bearbeitung und Verwaltung von strukturierten Datensätzen nach einem der vorhergehenden Ansprüche, wobei in diesem Verfahren beim Erzeugen eines individualisierten Vertragskopfes und/oder eines Basisleistungsvertrages eine Referenz auf eine Produktvorlage oder eine spezifische Basisleistungen für die jeweilige Produktvorlage erzeugt wird.

53. Das computer-implementierte Verfahren zur Erzeugung, Bearbeitung und Verwaltung von strukturierten Datensätzen nach einem der vorhergehenden Ansprüche, wobei in diesem Verfahren die Softwareprogramm-Komponente Auftragsmanager zum Aufruf einer Regel eine Regel-ID sowie Eingabewerte für die Regel erhält, womit ein generischer Regeltreiber aufgerufen wird, der eine Regeltabelle liest.

54. Das computer-implementierte Verfahren zur Erzeugung, Bearbeitung und Verwaltung von strukturierten Datensätzen nach einem der vorhergehenden Ansprüche, wobei in diesem Verfahren die Überprüfung der Einhaltung der Regel statisch oder dynamisch ausgeführt wird.

55. Das computer-implementierte Verfahren zur Erzeugung, Bearbeitung und Verwaltung von strukturierten Datensätzen nach einem der vorhergehenden Ansprüche, wobei in diesem Verfahren der Regeltreiber Daten zu einer Geschäftsbeziehungs-ID und die Regelverwendung mit Produktvorlagen-ID liest, und ein Regel-Programm mit folgender Schnittstelle aufruft: Attribute zur Geschäftsbeziehungs-ID, und Produktvorlagen-ID, und das Regel-Programms als Ergebnis OK/NOK zurückgibt.

56. Das computer-implementierte Verfahren zur Erzeugung, Bearbeitung und Verwaltung von strukturierten Datensätzen nach einem der vorhergehenden Ansprüche, wobei in diesem Verfahren
- die Softwareprogramm-Komponente Auftragsmanager Funktionalitäten zur Durchführung von Aufträgen betreffend die Kunden-/Partner-relevanten Kunden-Verträge bereitstellt,
- zur Durchführung der Aufträge sind Regeln auf der Ebene der Produktvorlagen implementiert sind, wobei
- eine Regel ein eigenständiges Objekt mit eigener Kennzeichnung und einem beschreibenden Text ist,
- die Regeln durch eine Regelbasis zur Verfügung gestellt werden,
- durch eine Regel bestimmt wird, welche Bedingungen zu erfüllen sind, damit einem Kunden / Partner ein Produkt mit der jeweiligen Basisleistung zugänglich gemacht wird,
- zwischen einer Regel und ihrer zugeordneten Basisleistung eine Beziehung hergestellt wird, und
- Regeln auch übergreifend über mehrere Basisleistungen einer Produktvorlage eingesetzt werden.

57. Computerprogrammprodukt, welches dazu ausgelegt ist, das Verfahren nach einem der vorhergehenden Ansprüche auszuführen wenn es von einem Computer oder einem Computer-Netzwerk ausgeführt wird.
